# EUROPEAN PATENT APPLICATION

(11) **EP 4 307 611 A1**
(43) Date of publication of application: **17.01.2024**
(21) Application number: 22185316.1
(22) Date of filing: 15.07.2022
(51) Int. Cl.: H04L 9/40, H04L 67/04, H04L 67/10, H04L 67/59, H04W 4/80

(54) **DATA COMMUNICATION AND CRYPTOGRAPHIC OPERATIONS FOR SECURE WIRELESS INTERACTIONS**

(71) Applicant: Mastercard International Incorporated, Purchase, NY 10577 (US)
(72) Inventor: RADU, Cristian, 1320 Beauvechain (BE); JOHNSON, Alan, Maldon, CM9 8HW (GB)
(74) Representative: Keltie LLP

(57) **Abstract**

There is provided a method of generating a secure result (1005) to support authorisation of a rapid wireless interaction (1000) between a first computing device (1001) and a second computing device (1002), the method being implemented by a third computing device (1003) remote from the first (1001) and second computing devices (1002). The method comprises: receiving, from the first computing device (1001) via a secure communications channel, a request to generate the secure result (1005), the request comprising interaction data (1014) relating to the wireless interaction (1000); retrieving, from a data store in secure communication with the third computing device (1003), cryptographic material (1015) to be used to generate the secure result (1005); generating, using the retrieved cryptographic material, the secure result (1005) by applying the cryptographic material to the interaction data; and transmitting, to the first computing device (1001) via the secure communications channel, the secure result (1005), for processing and onward provision by the first computing device (1001) to the second computing device (1002) for subsequent authorisation of the wireless interaction (1000). A computing device (1003) arranged to implement this method is also provided.

## Description

### Field of Disclosure

The present disclosure relates to data communication and cryptographic operations for a secure wireless interaction. In embodiments, the disclosure relates to a contactless payment using a contactless payment protocol.

### Background to Disclosure

Complex data processing typically ensues when multiple entities in a distributed network need to communicate with one another, particularly since these communications typically require specific processing and security protocols to be implemented to ensure that the data communicated is appropriately recognised and securely maintained. Such protocols will also evolve over time to reflect new system (hardware and/or software) capabilities, and to reflect various new technological advancements and developments that are made. In particular, the emergence and continued development over the last few years of edge / node computing and 5G communication networks. Additionally, technical requirements and technological capabilities can vary with geographic locations, depending on the specific protocols implemented and standards adopted.

It is typically not practical to upgrade all entities in a distributed system to support every capability of a new version of a protocol when it is established, and nor is it practical to equip these entities to handle all of the different capabilities implemented across all potential geographic locations where the entity may be used.

The challenges set out above are encountered across a range of technological fields where different standards and protocols develop over time and may develop independently / different in different locations. Examples of such fields includes cellular communications standards, as well as in the implementation of payment transaction schemes. Specifically in relation to payment transactions, an extended infrastructure connects banks, merchants and cardholders through a series of different networks with a transaction scheme infrastructure mediating the authorisation of a transaction and settlement and clearing processes. Whilst the transaction scheme infrastructure itself will be adapted to implement a latest version of a protocol, particular system elements may not be. Additionally, cryptographic techniques are typically utilised in payment transaction schemes to maintain the security and integrity of the data that is generated, exchanged and stored by the various entities. Such cryptographic techniques are especially important in transactions (such as remote and/or contactless transaction) where a digital payment application on a user's mobile device is used to facilitate the transaction (in lieu of a physical payment card). Such interactions may be more vulnerable to attacks from unscrupulous parties, attempting to intercept and gain access to sensitive information and/or commit fraudulent activities.

Wireless technologies such as radio-frequency identification (RFID) and near field communication (NFC) are used in a variety of contexts for short range, and typically rapid, interactions between one electronic device and another over a short-range wireless channel. Such arrangements are very widely used for contactless payment from a user device (such as a payment card that can be used as a proximity card, or another payment device such as an NFC-enabled mobile telephone) to a point of sale (POS) terminal.

Contactless payments are generally performed according to contactless EMV specifications (these standards are maintained by EMVCo, and they may be found at emvco.com) - the current version of these specifications is 2.10, published on 29^{th} March 2021. EMV standards generally implement ISO/IEC 7816, but ISO/IEC 14443 is also relevant for contactless cards). For security and for the convenience of the parties, it is desirable for contactless payment interactions to be performed quickly, typically within 500ms at most. This may prove challenging if the payment interaction requires significant processing, as may be the case when a complex calculation is required to produce a cryptographic result necessary to make the interaction secure. This may be too challenging to achieve, or to achieve reliably, on a payment device such as a mobile telephone.

It would be desirable to be able to achieve secure wireless interactions between devices reliably at high speed, even in situations where one of the devices has a processing capability that limits its ability to produce cryptographic results at high speed.

### Summary of Disclosure

In a first aspect, the disclosure provides a method of generating a secure result to support authorisation of a rapid wireless interaction between a first computing device and a second computing device. The method is implemented by a third computing device remote from the first and second computing devices. The method comprises: receiving, from the first computing device via a secure communications channel, a request to generate the secure result, the request comprising interaction data relating to the wireless interaction; retrieving, from a data store in secure communication with the third computing device, cryptographic material to be used to generate the secure result; generating, using the retrieved cryptographic material, the secure result by applying the cryptographic material to the interaction data; and transmitting, to the first computing device via the secure communications channel, the secure result, for processing and onward provision by the first computing device to the second computing device for subsequent authorisation of the wireless interaction.

This approach has clear benefits in enabling a wireless interaction (and particularly a wireless transaction) to be performed securely and quickly. For example, it is possible to outsource security protocol interactions for authorising a wireless interaction to other, remote computing devices that are not necessarily involved in the interaction. Since such security protocols can require significant computational power if they are to be carried out to the required degree / level of security, this outsourcing means that an appropriate computing device (having greater computational power / resources than the devices involved in the interaction) can be used to ensure that the security protocol, and hence the interaction itself, can be completed securely and rapidly. Moreover, the outsourcing of this security protocol to the remote computing device reduces the need for cryptographic material to be retained / generated by the devices carrying out the wireless interaction; hence the requirements for security of data protection at those devices is also correspondingly reduced.

In some implementations, the first computing device and the third computing device communicate by cellular telecommunications, and the third computing device is located at the base station of a telecommunications network.

In some instances, initiation to completion of the interaction takes less than 0.5 seconds.

In some instances, the request received from the first computing device further comprises a cryptographic identifier for identification of the appropriate cryptographic material to be used to generate the secure result. Optionally, the cryptographic identifier is associated with one of the following encryption algorithms: ECDSA or SM2, and AES128 or SM4.

In some implementations, the request (received from the first computing device) comprises a request to compute variables for a digital signature to be applied to the secure result by the first computing device. In such implementations, the method may further comprise: computing the requested variables, and transmitting the computed variables to the first computing device along with the secure result to allow the first computing device to digitally sign interaction data. Optionally, the digital signature is an elliptic curve digital signature.

In some implementations, the wireless interaction is a contactless payment transaction; in such instances, the first computing device may be a consumer computing device and the second computing device may be a point of sale terminal. Optionally, the secure result is an application cryptogram for the contactless payment transaction. In some implementations, the data store is retained by a distributed cryptographic service configured to provide cryptographic material for digital transactions.

In a second aspect, the disclosure provides a computing device comprising a memory and a suitably programmed processor, wherein the computing device is adapted to carry out the method of any of the implementations set out above, acting as the third computing device. Optionally, the computing device of this second aspect is an edge server.

In a third aspect, the disclosure provides a method at a first computing device of processing data to support authorisation of a rapid wireless interaction between the first computing device and a second device. The method comprises: initiating the wireless transaction with the second computing device; transmitting, to the third computing device and via a secure communications channel, a request to generate a secure result, the request comprising interaction data relating to the wireless interaction; receiving, from the third computing device and via the secure communications channel, the secure result, wherein the secure result was generated by the third computing device by applying cryptographic material to the interaction data, the cryptographic material being stored in a data store associated with the third computing device; and transmitting, to the second computing device, the secure result for subsequent authorisation.

In some implementations, the third computing device is an edge server. In such instances, the first computing device and the third computing device may communicate by cellular telecommunications, and the third computing device is located at the base station of a telecommunications network.

In some implementations, initiation to completion of the interaction takes less than 0.5 seconds.

In some implementations, the request sent to the third computing device further comprises a cryptographic identifier for identification of the appropriate cryptographic material to be used to generate the secure result. Optionally, the cryptographic identifier is associated with one of the following encryption algorithms: ECDSA or SM2, AES 128 or SM4.

In some implementations, the request (transmitted to the third computing device) comprises a request to compute variables for a digital signature to be applied to the secure result by the first computing device. In such implementations, the method may further comprise receiving, from the third computing device, the computed variables; and using the computed variables to digitally sign interaction data including the secure result for provision to the second computing device. Optionally, the digital signature is an elliptic curve digital signature.

In some implementations, the wireless interaction is a contactless payment transaction. In such instances, the first computing device may be a consumer computing device and the second computing device may be a point of sale terminal. Optionally, the secure result is an application cryptogram for the contactless payment transaction.

In a fourth aspect, the disclosure provides a computing device comprising a memory and a suitably programmed processor, wherein the computing device is adapted to carry out the method of any of the implementations of the third aspects set out above, and as a first computing device. Optionally, the computing device is a mobile telephone. Optionally, the computing device is programmed to use host card emulation for wireless interaction with a second computing device. In some instances, the computing device may comprise a wallet application adapted to carry out the method of any of the appropriate implementations set out above.

It will be appreciated that similar benefits and advantages will be associated with the systems and devices implementing these methods as were described previously in association with the methods. In addition, corresponding additional (optional) features set out in respect of the above-described methods would also be equally applicable in respect of the respective systems and devices.

Within the scope of this application it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Description of Specific Embodiments

Specific embodiments of the disclosure are now described, by way of example, with reference to the accompanying drawings, of which:
**Figure 1** shows a general approach adopted by elements of the disclosure in addressing technical problems associated with providing a secure wireless interaction between devices at high speed;
**Figure 2** shows schematically a distributed transaction architecture using a four-party model;
**Figure 3** illustrates elements of a complex distributed system adapted to implement the transaction architecture of Figure 1;
**Figure 4** shows schematically an exemplary system for enabling digital transactions in the transaction architecture of Figures 2 and 3;
**Figure 5** shows schematically elements available for use in the transaction architecture of Figure 2 where a 5G telecommunications architecture is available for use by a mobile device;
**Figure 6** illustrates cryptographic processes for an exemplary contactless transaction;
**Figure 7** illustrates a security architecture for a client computing device;
**Figure 8** illustrates computational elements used for an existing digitized contactless transaction method;
**Figure 9** indicates a flow before a transaction and **Figure 10** indicates a flow during a transaction for the digitized contactless transaction method of Figure 8;
**Figure 11** indicates a computing and communications architecture suitable for implementing embodiments of the disclosure;
**Figure 12** illustrates schematically an arrangement for a distributed system for digital enablement of transactions;
**Figure 13** illustrates a computing node of the arrangement of Figure 12 in more detail;
**Figure 14** illustrates elements within the computing node of Figure 13;
**Figure 15** indicates transaction flow in relation to operations performed by the node of Figure 13;
**Figure 16** indicates an approach to key management used in the arrangement of Figures 12 to 15;
**Figure 17** illustrates an exemplary approach to transaction identification;
**Figure 18** illustrates an exemplary set of cryptographic mechanisms for use for digitized transactions in the arrangement of Figures 12 to 17;
**Figure 19** illustrates a global model of key management with individual modes managed as shown in Figure 16;
**Figure 20** illustrates a global model of monitoring associated with the key management model of Figures 16 and 19;
**Figure 21** shows a contactless transaction processing flow used by the architecture of Figure 11 to implement embodiments of the disclosure;
**Figure 22** illustrates in detail additional cryptographic processing that is used for implementing aspects of the present disclosure;
**Figure 23** illustrates the structure of digital transaction information appropriate for use in embodiments of the present disclosure;
**Figure 24** illustrates a transaction processing architecture for use in implementing aspects of the present disclosure; and
**Figure 25** illustrates establishment of temporary secure tunnelling between components of the architecture of Figure 11.

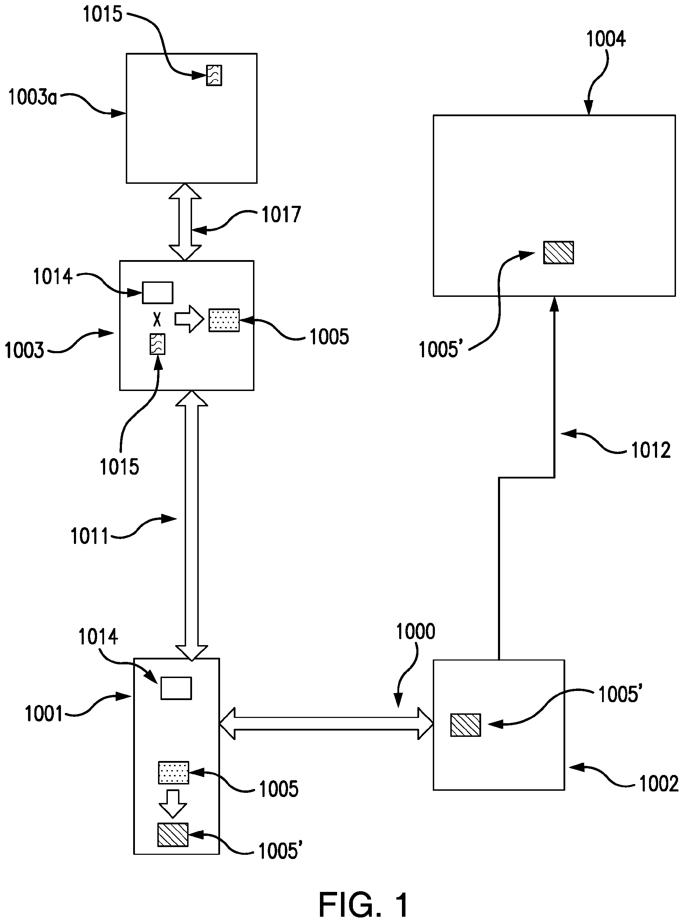

In general terms, the problem addressed by the disclosure and the solution employed by embodiments of the disclosure is illustrated in **Figure 1****.**

In general terms, the problem addressed by the disclosure and the solution employed by embodiments of the disclosure is illustrated in Figure 1. A wireless interaction 1000 is to be carried out between first device 1001 and second device 1002 - this wireless interaction 1000 is intended to be both rapid and secure. For the interaction to be secure, a security protocol needs to be performed between the first device 1001 and the second device 1002, and for purposes where a high level of security is required, this may require significant computational power at both the first device 1001 and the second device 1002. If the first device 1001 has limited computational power, this may prevent the interaction taking place both securely and rapidly.

The architecture shown in Figure 1 supports a wireless interaction 1000 which is both rapid and secure. The first device 1001 is here supported by a third device 1003 with which the first device 1001 has some form of networked connection - the third device 1003 has sufficient computational power to complete security protocol results.

In the architecture shown here, the wireless interaction 1000 involves the generation and delivery of a secure result 1005, from the first device 1001 to the second device 1002, with the secure result being provided over communication channel 1012 to a verification system 1004 for subsequent authentication of the interaction. Due to its relatively greater computational power, at least a portion of the processing that is required to implement the security protocol and to produce the secure result 1005 is outsourced by the first device 1001 to the third device 1003.

A secure communications channel is established between the first device 1001 and the third device 1003, and information is exchanged over this channel in a interaction 1011 between the two devices. During this interaction 1011, the first device 1001 provides certain pieces of data 1014 (relating to the interaction 1000) to the third device 1003, along with information identifying how the processing is to be carried out by the third device 1003. The third device 1003 accesses secure (cryptographic) material 1015 and generates the secure result 1005, which is transmitted back to the first device 1001. In some instances, the third device 1003 may retain the cryptographic material 1015 in an associated data store; in other instances, an additional device 1003a (e.g., a cryptographic service provider), having a secure networked connection with the third device 1003, may store the cryptographic material 1015 and may provide this to the third device 1003 upon request. The first device 1001 then performs further processing (e.g., encryption) of the secure result 1005. This processed secure result 1005' is then returned to the second device 1002 for onward provision to the verification system 1004.

While this approach can be applied to a variety of wireless interactions that need to be very rapid - for example, for secure access control or smart ticketing - it is particularly appropriate for contactless payment, where in many contexts interaction duration of 500ms or less is required, and the level of security required may be significant (particularly for higher value transactions). In this case, the wireless interaction 1000 may be a short-range wireless "tap and go" interaction, using a technology such as NFC.

This approach is particularly appropriate where the second device 1002 is a POS terminal of some kind but the first device 1001 is a mobile telephone handset - this may not have sufficient computational power available for high-speed generation of a necessary secure result. However, such a telephone handset may be able to make a secure connection to a third device 1003 with much greater computational power, such as an edge server accessible as part of a 5G communication system. In this case, the edge server may be used to perform the function of providing cryptographic services to the telephone handset that may be used to assist in the generation of the secure result 1005, and specifically, in the accessing and use of cryptographic material (e.g., cryptographic keys) to encrypt transaction related data 1014 that was generated during the contactless payment interaction 1000. The encrypted data may be provided as a secure result 1005 for the telephone handset to further verify / process / encrypt before transmission of the final (processed) secure result 1005' to the POS terminal. In order to provide this function, the additional device 1003a may take the form of a cryptographic service provider, with which the edge server may be in communication and which generates, stores and/or manages cryptographic (key) material that is used to generate the secure result 1005.

Some specific implementations will be described in more detail in the context of a transaction scheme. A suitable transaction scheme and infrastructure will first be described in more detail in order to provide a basis for understanding the processing improvements that are provided in this context.

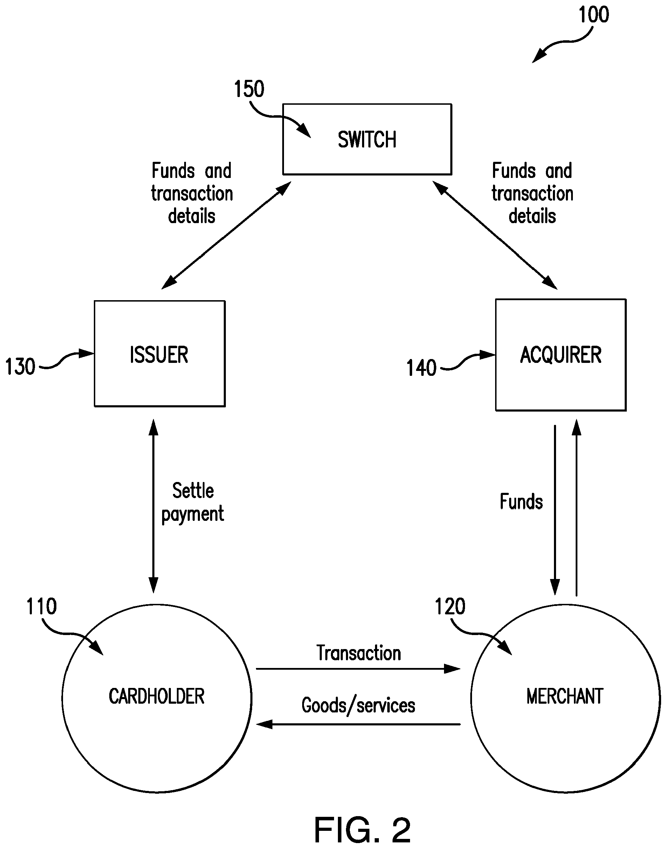

**Figure 2** is a block diagram of a typical four-party model for a payment transaction scheme. The diagram illustrates the entities present in the model and the interactions occurring between entities operating in a card scheme. Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120. The model also comprises a central switch 150 - interactions between the issuer 130 and the acquirer 140 are routed via the switch 150.

The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of a remote transaction). Once the additional verification process is complete the transaction is authorized.

On completion of the transaction between the cardholder 110 and the merchant 120, the transaction details are submitted by the merchant 120 to the acquirer 140 for settlement. The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

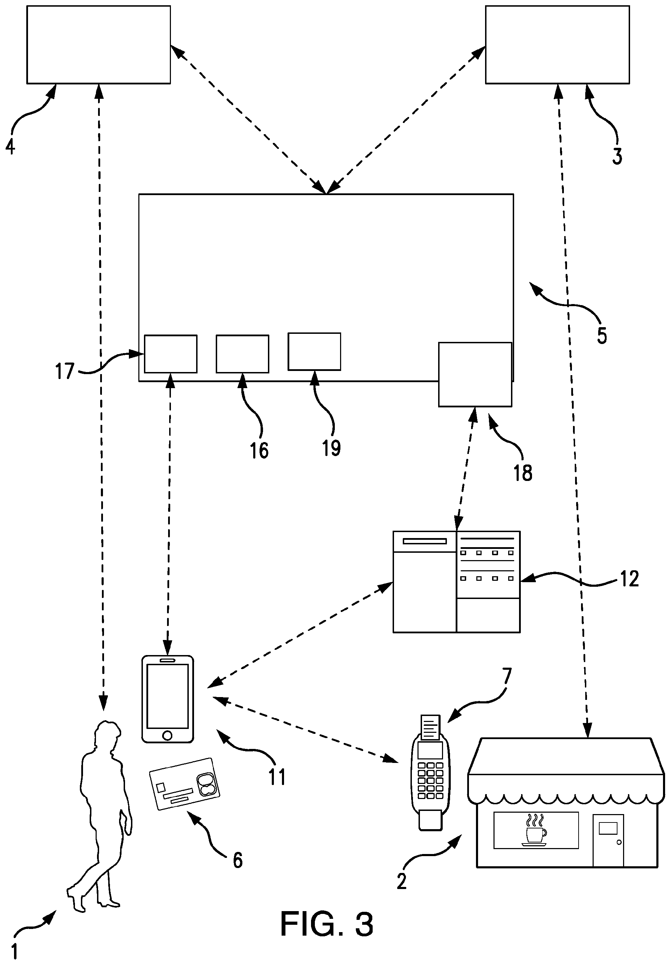

**Figure 3** shows an architecture appropriate for interaction between a cardholder and a merchant. This figure shows a general-purpose architecture for reference, but it shows elements of an architecture used when a cardholder carries out a remote transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use these to transact with a merchant POS terminal 7 using NFC or another contactless technology, or to make a payment in association with its wallet service as discussed below. Additionally or alternatively, for a remote transaction, the smartphone 11 may also be able be able to interact with a merchant server 12 representing the merchant 2 over any appropriate network connection, such as the public internet - the connection to the merchant may be provided by an app or application on the computing device.

The transaction scheme infrastructure (hereafter simply referred to as 'transaction infrastructure') 5 here provides not only the computing infrastructure necessary to operate the card scheme and provide routing of transactions and other messaging to parties such as the acquirer 3 and the issuer 4, but also a wallet service / server 17 to support a digital wallet on the cardholder computing device; optionally, an internet gateway 18 is also provided to accept internet-based transactions for processing by the transaction infrastructure. This internet gateway 18 may be provided by a payment service provider, and in some arrangements the merchant 2 may interact with an internet gateway rather than directly with the acquirer. In other embodiments, the wallet service / server 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction infrastructure 5 provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

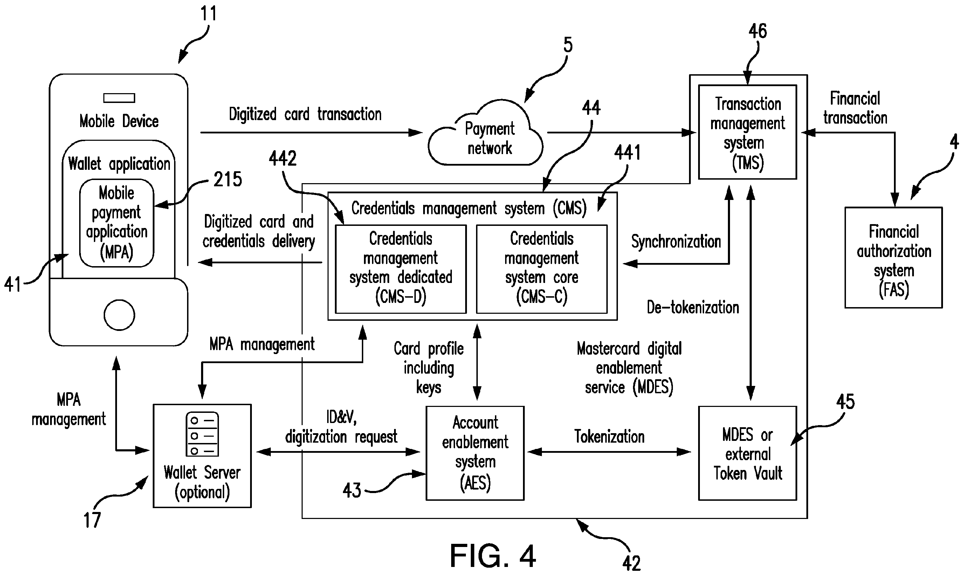

**Figure 4** shows elements of a transaction infrastructure to support digitized payments from a mobile device in more detail. This figure shows as a specific example the Applicant's Mastercard Cloud-Based Payment (MCBP) architecture - this is exemplary rather than specific to the invention, and it illustrates how the architecture is used to support a mobile payment application (MPA) 215 on a mobile device (such as smartphone 11) - here the MPA 215 is shown as contained within a wallet application or digital wallet 41. Such a digital wallet 41 may communicate with the wallet service / server 17 (which here takes the form of a wallet server) to allow management of the MPA 215, and it also can be used to request digitization of a payment card 6 to be used by the mobile device 11 (whereby the digitized payment card is stored in / associated with the digital wallet 41).

The Mastercard Digital Enablement Service (MDES) 42 performs a variety of functions 5 to support mobile payments and digitized transactions. As indicated above, the MDES 42 is exemplary only - other embodiments may use digitization, tokenization and provisioning services associated with other transaction processing infrastructures, for example. The wallet server 17 is not shown as part of the MDES 42 - and need not be present, for example if the MPA 215 is not embedded within a digital wallet 41 - but in the illustrated example acts as an interface between the mobile device 11 and the MDES 42 to enable management of the MPA 215. The MDES 42 also mediates tokenized transactions so that they can be processed through the transaction scheme as for conventional card transactions. The following functional elements are shown within the MDES 42: the Account Enablement System (AES) 43, the Credentials Management System (CMS) 44, the Token Vault 45, and the Transaction Management System (TMS) 46. These will now be described briefly below.

The Account Enablement System (AES) 43 is used in card digitisation and user establishment. It will interact with the MPA 215 (here through the wallet server 17) for card digitisation requests and will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the MPA 215 such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

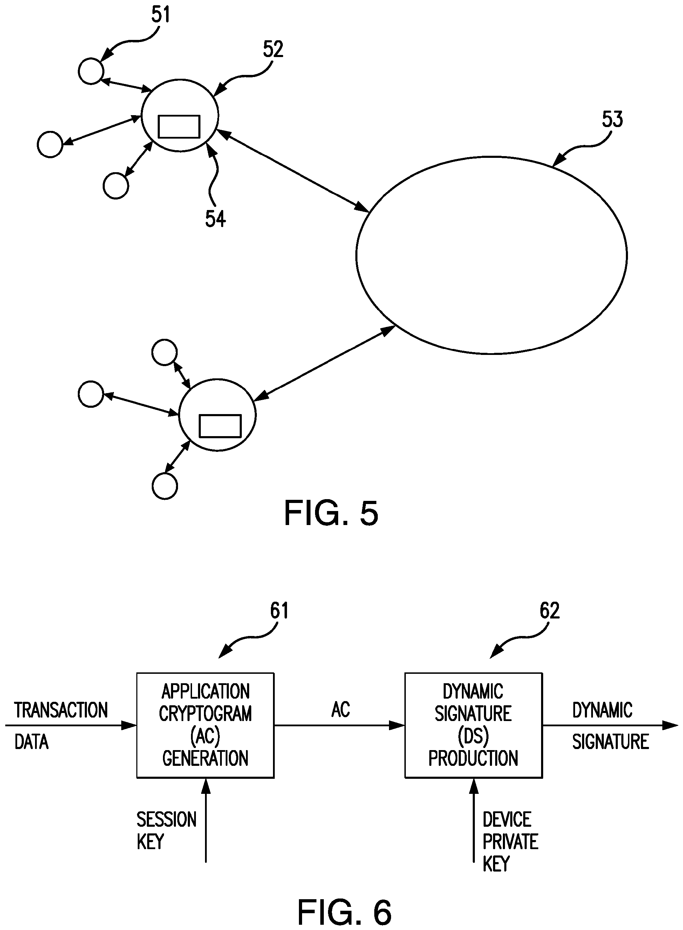

Embodiments of the present disclosure relate particularly to contactless transactions and their digitization, and to implementation in 5G networks. Relevant features of 5G networks will now be described with reference to Figure 5, and an existing approach to digitization of contactless transactions will then be described with reference to Figures 6 to 10.

**Figure 5** shows a cellular communications network in which user equipment 51 (typically such "user equipment" is a mobile telephone handset, but the term is the generic one for the end stage device of such a network) connects to a radio area network 52, and through the radio area network 52 to the core network 53 of the telecommunications system provider. This approach is generally used for any radio access technology (such as GSM, UMTS and LTE), but 5G is distinguished by its support for multi-access edge computing (MEC). This provides a distributed computing environment for application and service hosting close to cellular subscribers for extremely rapid response. This may be achieved by using an MEC application server 54, typically integrated with the radio area network 54 for example by deployment at the base station. The MEC application server 54 can be used to host applications to provide services to customers - an MEC application server is typically a multitenancy run-time and hosting environment and while the hardware may be considered part of the cellular telecommunications network, third party services may be hosted on this hardware for interaction with user equipment.

**Figure 6** illustrates cryptographic processes - specifically, the cryptographic payment proof computation - for an exemplary contactless transaction. This consists of the combination of results from two cryptographic primitives: the generation 61 of an application cryptogram (AC), and the production 2 of a digital signature (DS).

The application cryptogram is generated using an appropriate algorithm, typically a block cipher such as AES or SM4 in CBC mode. This operates on transaction data using a session key that is unique per transaction (the payment application has access to an application transaction counter - ATC - controlled by the payment device on behalf of the issuer) per active device (associated with a token PAN). The transaction data, which is provided by the terminal, includes an unpredictable number (UN). When received in the payment processing system for authorisation via the terminal and the PSP/Acquirer, the TMS (as described in Figure 4 above) verifies it to counter transaction counterfeit attempts such as replay attacks - the TMS has the information used to provide the session key and is able to recompute it.

The digital signature is constructed using a digital signature algorithm such as ECDSA or SM2. This operates on the AC and on account information (the token and the expiry date) - this provides proof for the contactless terminal that the digital card is authentic. This is an active protection against other forms of attack (such as edge device attacks, which aim to substitute the AC with a fake value).

More than one type of contactless flow is possible. For example, there may be a "fast flow" and a "slow flow" that apply in different circumstances. For a non-local card, it may be desirable to implement a full transaction flow (implementing this in EMV, the cryptographic proof may be provided in response to a First Generate AC command). In use, this may require the user to "tap and hold" the payment device for a longer period of time - for example, a few seconds - to allow the whole protocol to be carried out when the payment device and the terminal are in proximity to each other.

For a local card where it is desirable for the transaction to be rapid - for example, at a ticket gate to a rail system during rush hour - a "fast flow" may be implemented. In this case the return of the cryptographic proof may take place earlier during the Get Processing Options command. These transactions are designed to take place in a fraction of a second - typically no more than 500ms between the terminal connecting with the payment device and the provision of the final signed response to the terminal. This may require the computation of the cryptographic proof to take place in 150ms or less.

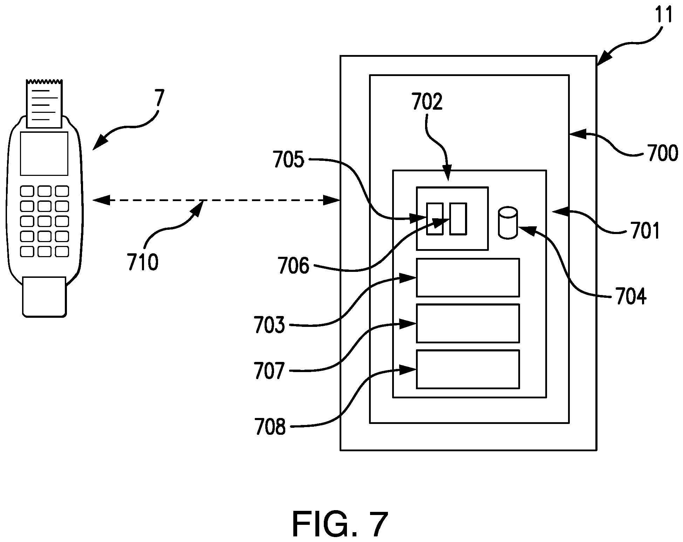

**Figure 7** indicates an appropriate architecture for a payment device comprising a "digital card" hosted on a user computing device such as a mobile telephone handset 11. Some implementations of such digital cards use a physical secure element (SE) - ApplePay is an example of this - but the embodiment described here uses a software solution (such as is used in, for example, devices running an Android operating system). The user device here has a Rich Execution Environment (REE) 700 in which applications generally run, and a Host Card Emulator (HCE) within it to provide digital wallet functionality. Host Card Emulation is widely used on Android architectures to support such functionality and to allow NFC based interaction between devices. This allows secure card hosting without reliance on a physical secure element (which is in most architectures impractical, as the only physical secure element is a SIM under the control of the Mobile Network Operator without effective access by other parties). In this case, there is a wallet application 701 in the REE (termed here the "Go Shopping" or GoS application in examples) which includes one or more mobile payment applications 702 (MPA) to provide payment functionality. Such an application may provide remote shopping capability, or a blended remote and bricks-and-mortar experience, but this is not considered further here - the present disclosure relates to face-to-face contactless payment at a point-of-sale (POS) terminal 7.

As shown in Figure 7, the Go Shopping application comprises the following elements:
- A Consumer Device Cardholder Verification Method (CD-CVM) element 703. This needs to have access to a local authenticator operating in the REE (a PIN entered over a keyboard, a fingerprint reader, facial recognition technology etc.). CD-CVM is required for two factor authentication (particularly for two factor - strong consumer authentication (2F-SCA)).
- A Mobile Payment Application (MPA) 702. Here this will typically use software obfuscation techniques (such as white-box cryptography) to implement the following functionality in software:
   ∘ A Local Encrypted Database (LDE) 704 in which the secret key for AC generation and the associated Application Transaction Counter (ATC) are stored along with the private key for digital signature. These are stored in an encrypted format until needed for computation of the AC by the MPA and for (dynamic) digital signature.
   ∘ A MAC algorithm 705 for AC generation. This may be by symmetric key encryption, chaining in CBC mode of the AC input data.
   ∘ A dynamic signature algorithm 706 for dynamic signature production - this will be an asymmetric key algorithm.
- A contactless interface (here "Go Shopping Contactless") 707 for contactless communication - in this specific case, by an NFC connection 710 with the terminal 7.
- An internet interface (here "Go Shopping Internet") 708 for network communication to external computing resources, such as the Mastercard Digital Enablement Service - as will be noted below, in embodiments of the disclosure this may be used to contact computational resources available through 5G networking.

As described above, an exemplary digital transaction technology using tokenization is the applicant's MCBP, described in Figure 4 above. Examples that follow will be described in the context of MCBP, though the technical solutions described are relevant to other digital transaction architectures. The following features of MCBP are relevant to implementation here:
- ISO algorithms are current used for cryptography (3-DES/AES, RSA/EC DSA, SHA-256), though alternatives with equivalent functionality could be used in alternative implementations (such as SM4 for symmetric encryption, SM2 for digital signature, SM3 for hashing).
- EMVCo key derivation schemes are used with a cloud-based server system - CMS, also referred to as CMS-D where the card system is dedicated to a particular wallet provider. The MPA needs to connect from time to time to the CMS/CMS-D to replenish its LED with fresh session keys for AC production in future transactions.
   ∘ As software security is used to protect session keys, these are typically uploaded only in limited numbers and late to minimise exposure-though for a contactless transaction to be possible, the session key must already have been loaded (it will not be possible to do this during a transaction, as the transaction process is typically significantly shorter than the key uploading process).

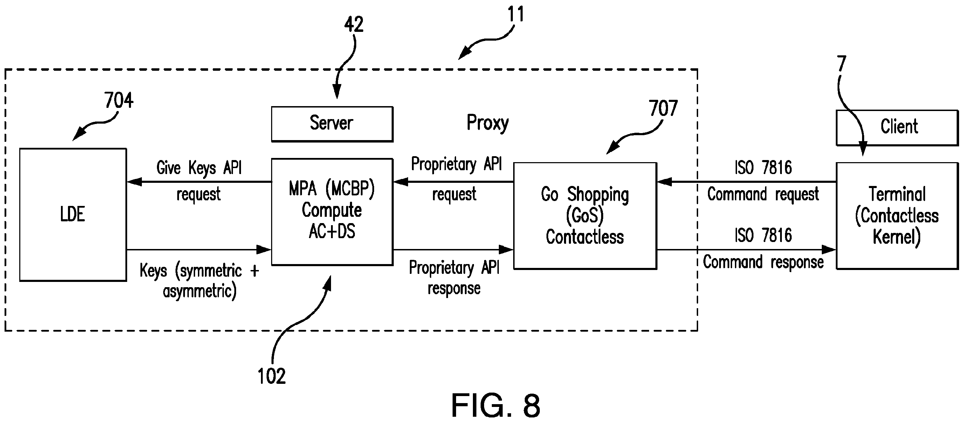

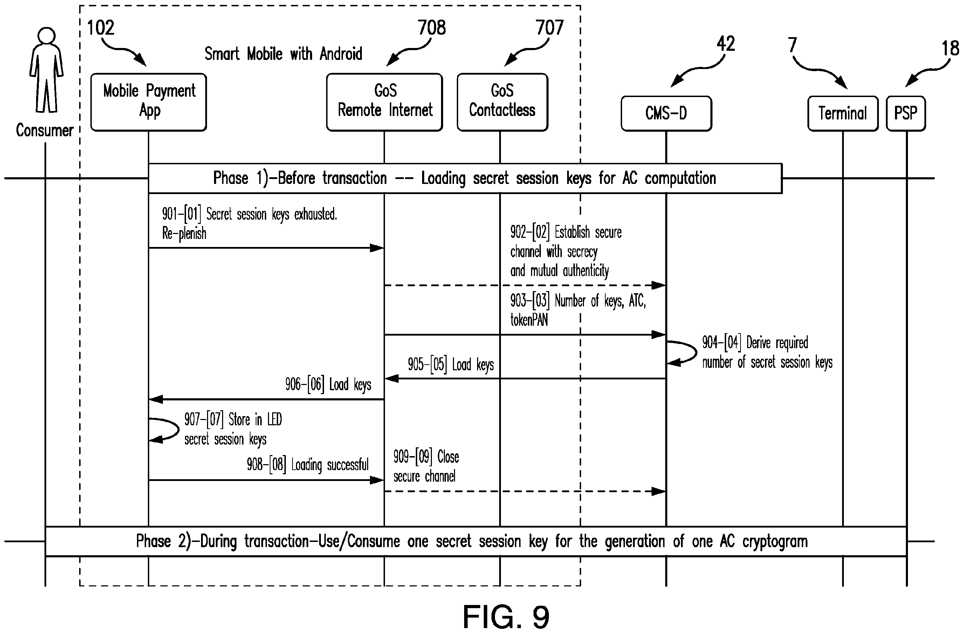

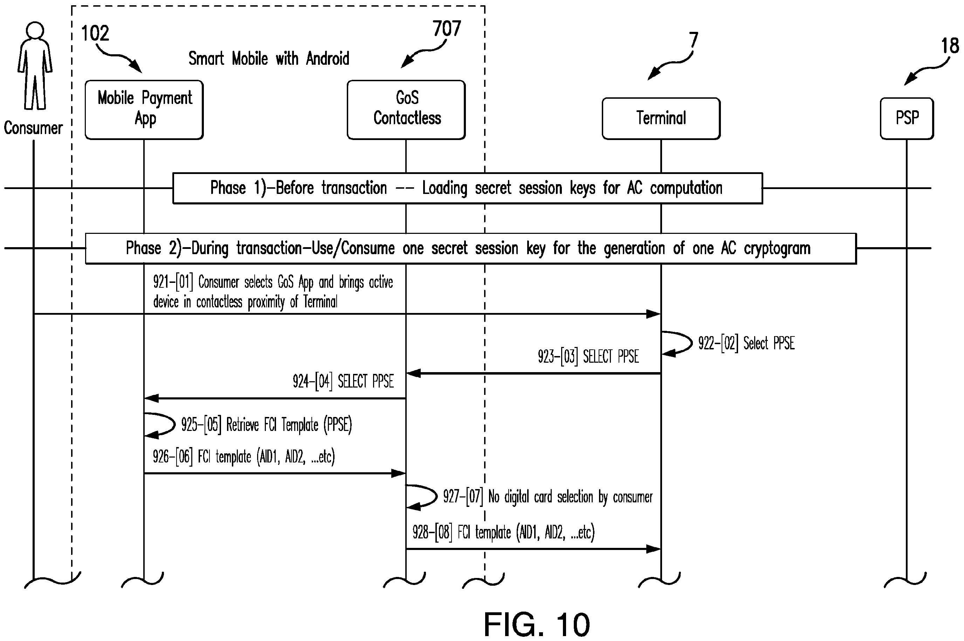

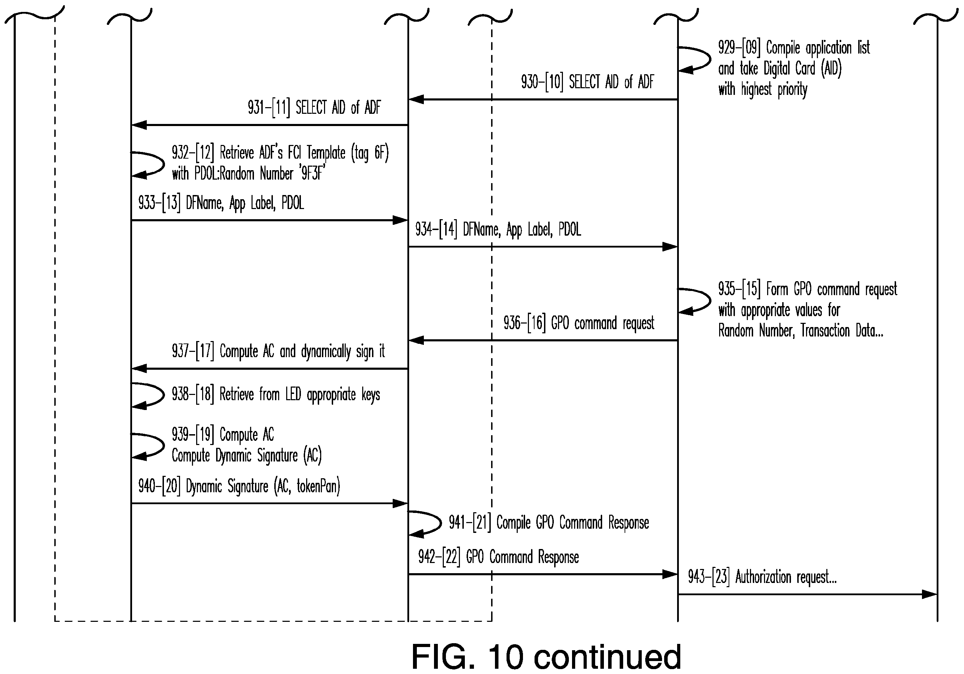

Interaction between these elements in performing a transaction according to a "fast" flow is shown at a high level in Figure 8, with pre- and in-transaction flows shown in Figures 9 and 10 respectively. As shown in **Figure 8**, when communication is established between the user device 11 and the terminal 7, a command (using an ISO 7816 standard) is sent from the terminal 7 to the client - the transaction details are provided from the terminal to the device in this way. This command is received by the Go Shopping wallet application 707, which makes a request (which may be under any appropriate protocol - typically this will be through a proprietary API) to the MPA 102 to perform the necessary cryptographic functions (AC and DS generation). The MPA 102 will previously have been provisioned with keys for this purpose through MCBP 42, and it will have stored these in the LDE 704. The MPA will then retrieve a set of these previously stored keys by making a request to the LDE 704, and it will use these to compute the AC and to provide the dynamic digital signature. These are provided to the Go Shopping wallet application 707, and hence to the terminal 7 using an ISO 7816 command response.

As will be appreciated from the above description, the Go Shopping wallet application provides 'front-facing' functionality (interacting with the terminal) for the user device - receiving various command requests and command responses (formatted according to the prevailing standard utilised in these contactless payment communications, in this case the ISO 7816 protocol) - and essentially serves as a proxy for the MPA that functions in the background.

Such a flow is shown in detail in Figures 9 and 10. **Figure 9** shows the pre-transaction flow in which secret session keys for AC computation by the MPA are loaded into the LDE from the CMS-D. When the session keys available to the MPA are exhausted 901 (although possibly instead of complete exhaustion this step could be triggered with one or two keys still left), the MPA begins the replenishment process. The MPA communicates with the (Go Shopping) wallet application which establishes 902 a secure channel over an internet connection with the CMS-D - this channel is secure and there is mutual authentication. The wallet application then requests 903 a number of keys, providing the current ATC and the tokenPAN for the tokenised card. These keys are then derived 904 by the CMS-D and loaded 905 to the wallet application over the secure channel. The keys are then loaded 906 by the wallet application to the MPA, and stored 907 in encrypted form in the LDE. On confirmation that the loading is successful 908, the secure channel is closed 909, ending the replenishment phase.

**Figure 10** shows the subsequent transaction phase, whereby the transaction is started by the consumer opening or otherwise activating the wallet application and bringing the payment device into proximity 921 with the terminal (within a certain distance of the terminal) to establish communication and begin the contactless transaction. As is normal for an EMV contactless transaction (the terminology used throughout this paragraph is standard EMV terminology), the first step is to establish a PPSE (Proximity Payment System Environment) for the transaction - this is initiated 922 by the terminal, with a SELECT PPSE command sent 923 to the wallet application and communicated 924 to the MPA, which retrieves 925 its template (FCI - File Control Information - template) for such a transaction and provides 926 this to the wallet application. The wallet application notes 927 that there will be no card selection process by the consumer - as this is a rapid contactless transaction that needs to operate according to established defaults - and provides 928 a list of payment applications by application identifier (AID) to the terminal, with the "fast flow" application () heading the list. The application list is prioritised 929 by the terminal, and here it is assumed that fast flow is selected and this is communicated 930 to the wallet application, and hence 931 to the MPA. The MPA then retrieves 932 the FCI template and establishes what information is needed from the terminal and in what form and provides 933 this to the wallet application as a Processing Data Objects List (PDOL), which is sent 934 to the terminal. The terminal prepares 935 this information for a Get Processing Options (GPO) command with the information needed by the MPA to prepare an AC - this will include the transaction data and a random number and potentially other information. The GPO command is sent 936 to the wallet application and on 937 to the MPA, which identifies the requested algorithm specified and retrieves the necessary key 938, then computes the AC and further produces the dynamic signature 939 as indicated above, with the dynamic signature comprising the AC being sent 940 to the wallet application. The wallet application compiles 941 and sends a response to the GPO command to the terminal, which then sends an authorization request 942 in the standard manner for an EMV transaction.

The approach set out above uses existing technological arrangements, and has certain drawbacks. One is the reliance on the LDE as the secure element (both for symmetric and private keys, but also for local authenticator linked sensitive data such as a reference PIN or biometric) - there is some risk, particularly if prolonged access to the device is obtained, of a reverse engineering attack. The digital payment system is also constrained: the TMS (Transaction Management System) may be limited in the number of transactions that can be processed as processing requires access to a centralized token vault; the CMS-D may not be effectively scalable, particularly if there are a large number of devices to provision which are also geographically dispersed; and the key derivation approach of EMV can lead to the creation of a very large number of keys which will not all be used effectively (the 'key avalanche' effect).

As noted above, existing "fast" arrangements rely on pre-provisioning of the payment device with secret keys so that contactless operation need not rely on any external connection. In a 5G environment, however, the availability of fast local edge servers allows "external" computation with very low latency. Embodiments of the present disclosure exploit this aspect of a 5G architecture to realise new models of contactless interaction which can meet timing requirements without needing to make operational compromises of the kind indicated above. This may be paired with a decentralized version of the digitized payment infrastructure of Figure 4 such as is described in the applicant's earlier WO 2022/046330 A1, for example. This decentralized scheme, termed NODES, is described in further detail below, but is briefly referenced in the immediately following discussion of transaction flows that can be achieved using a 5G computational architecture.

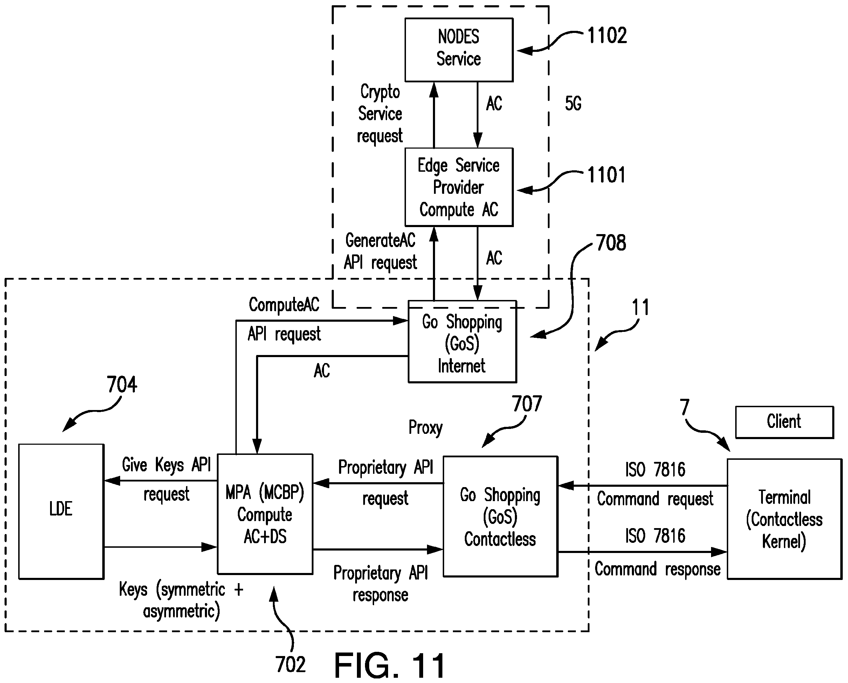

**Figure 11** shows how the contactless transaction process and architecture of Figure 8 may be enhanced in a 5G computational and communications architecture. The contactless interaction between the payment device 11 and the terminal 7 follows the same ISO 7816 approach as before, mediated by the wallet contactless application 707, but there is now another route which the mobile payment application 702 can take to support rapid computation other than simply rely on resources preloaded into the LDE 704 - it can use a path (here mediated through the wallet internet application 708) to access an edge service provider 1101 to provide computing services. This edge service provider may, for example, be implemented in an MEC application server provided as part of the 5G infrastructure. Cryptographic services for the edge service provider may be provided by a cryptographic service provider 1102. This may, for example, be a node of a NODES system as described further below. This may again be located within the 5G infrastructure (and possibly also implemented by a MEC application server, even the same MEC application server as for the computation), but may be a separate computing entity with a secure channel to the edge service provider 1101. Where both edge service provider 1101 and the cryptographic service provider 1102 are located in the edge, rather than in the cloud, there is the possibility of sufficiently rapid AC calculation to meet "fast flow" requirements while not needing to rely on what is present or pre-loaded in the payment device itself.

The architecture implemented in Figure 11 enables the outsourcing of the AC computation process to entities other than the active device' user device (smartphone 11). This outsourcing brings with it multiple benefits, especially in relation to transaction processing simplicity and speed, as well as in relation to the security of the sensitive data that is utilised during the transaction processing. To begin with, the improved processing power and speed that are provided by the additional servers / computers and the secondary edge server (compared with the capabilities of the smartphone 11) achieves a corresponding increase in the speed with which each transaction may be processed - since the time taken for the cryptographic processing required during AC generation will be reduced.

Moreover, outsourcing the retention of the session keys used for AC generation, as well as the generation of the AC itself, to the edge service provider 1101 and the cryptographic service provider 1102, increases the security for the sensitive session keys. In the Figure 11 implementation, the session keys used in AC generation never leave the security of the additional servers / computers, and therefore an attack on the active user device would not have the potential to compromise the secret session keys via reverse engineering. Furthermore, since the secret session keys used for AC generation are not retained by the smartphone 11 user device, no periodic downloading of secret keys from the MDES 42 is required and in fact the keys are not transmitted to the active device smartphone 11 at all. This eliminates another point of vulnerability for the session keys (and also obviates the need for a secure communications channel to be established in a pre-transaction phase between the MPA and the MDES 42 for transmission of the secret session keys). It also simplifies the transaction processing flow, since the pre-transaction phase (described above in relation to Figure 9) can effectively be eliminated.

In addition to minimising the risk to security for the session keys, the implementation used in the architecture of Figure 11 also helps to minimise inefficiencies that can be caused by the above-mentioned 'key avalanche' effect, since only those secret session keys that are required for AC generation are utilised.

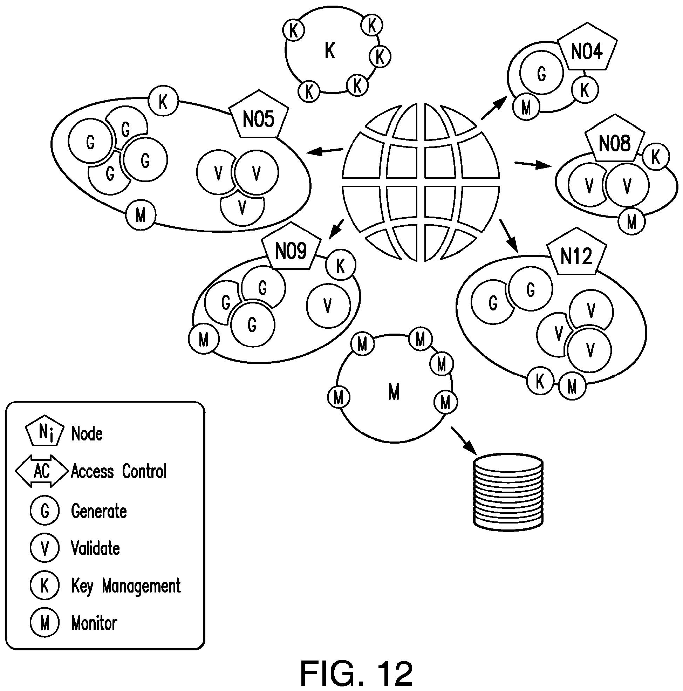

The NODES infrastructure has been described in earlier cases - for example, the applicant's earlier WO2020/247093 and WO2022/046330, the disclosure of which is here incorporated to the extent applicable by law - as an approach to enabling aspects of a system for the performance of a digitized transaction - and in particular the management of credentials - to be decentralised. This is done by replacing a central node with a decentralised set of nodes each capable of credential management, as is shown in Figures 12 to 20.

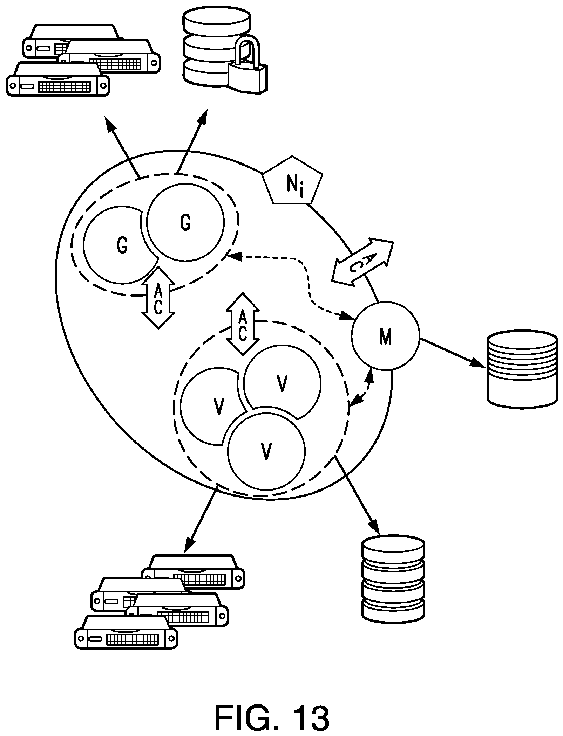

**Figure 12** shows a decentralised system of computing nodes Nx, each capable of both generating G and validating V credentials. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and they need to be able to generate the credentials securely and validate them securely while they are valid at least. In the context of the present disclosure, it can be assumed that one of these nodes is located in the edge of a 5G system, so that it can provide credential generation and validation services to clients accessing a 5G network through that edge. In the architecture shown, credentials are not stored - they are generated on request and validated on the fly. As **Figures 12** **and** **13** show, in addition to credential generation and validation, key management K and monitoring M can be considered as services both locally at a node and across the system, and access control AC (AC - note that this is not the same abbreviation as for discussion of transaction flows, where AC will refer to Application Cryptogram) will typically be required to allow access to a service. These aspects will all be described in more detail below.

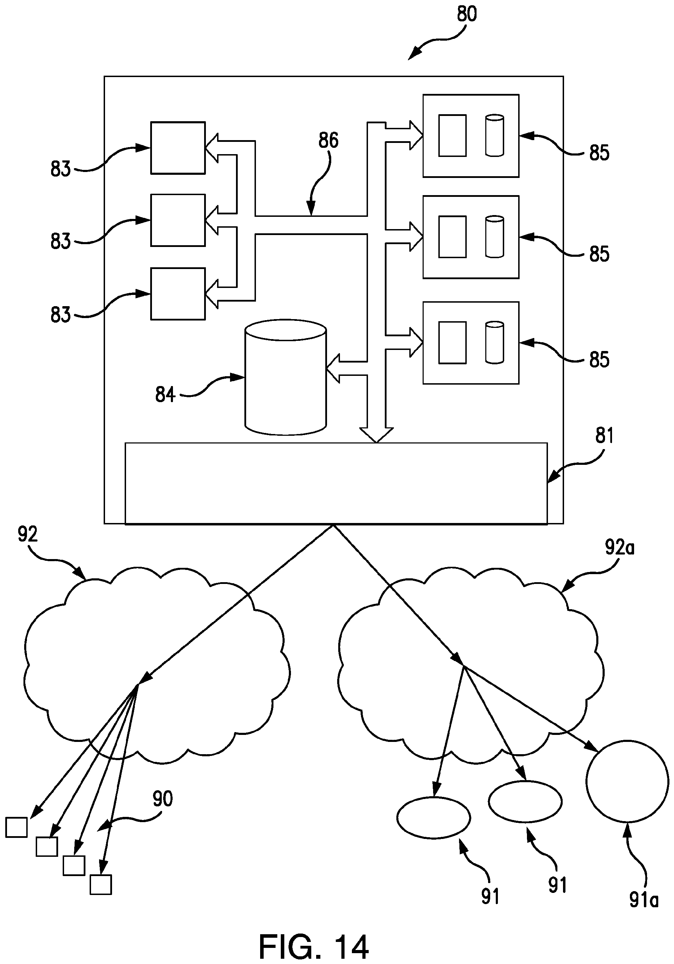

Elements of a suitable computing node are shown in **Figure 14**. The node 80 comprises at least one networking connection 81 to allow communication to clients 90 and other nodes 91 as well as (in this example) a central node 91a. Communication is shown here as being through separate networks to each set of other parties - through a first network cloud 92 for connection to clients (in embodiments of the disclosure, this may be simply the 5G connection to clients connected to that edge), and a second network cloud 92a for connection to other nodes within the distributed system. This reflects that these networks may be physically different, or that they may have different security requirements and protocols.

The node 80 may generally be implemented by one or more conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material in the form of keys needed to perform cryptographic functions and to perform cryptographic functions securely. Here elements within the node 80 are shown communicating by means of a bus 86. While the node 80 in this case is represented as a single data centre, this is not required - the "bus" may be, for example, comprise a dedicated network connection between a group of related data centres that allows them to provide a real-time response such that they will appear to other entities communicating with the node to be part of an integrated whole.

Existing procedures for credential management in payment systems are centralised - any request to create or validate credentials results in a query to a centralised system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. This also applies to operations taking place within the 5G infrastructure. There are thus interactions that may require multiple cryptographic operations for security in a device context that can be streamlined when delivering services in a server context when exposing API to access the services while keeping all the assets secure in a constrained environment including key management and cryptographic operations.

As can be seen, NODES provides a distributed system for generation and validation of credentials - however, care is needed in design to ensure that any benefits in distribution of computation are not offset by vastly increased messaging to ensure system-wide operation (including generation of credentials at one node and validation and another). Existing EMV key generation processes would lead to propagation of large numbers of keys and associated messaging. In NODES, however, the distributed approach is supported by replacing the binding of a token to a specific hierarchically derived key, allowing instead the first available key from a stack of keys to be allocated to a tokenized transaction. This approach, using flexible and dynamic key management, allows for a scalable solution. Monitoring can be carried out in such a way as to ensure that the distributed architecture is secure without requiring the transmission or replication of large quantities of sensitive information. This approach can also be carried out in a standard HSM using fully FIPS compliant processes - for example, DES and 3DES need not be used. This approach is described in more detail below.

As noted above, the current EMV security model for digital transactions uses a security model as illustrated in Figure 4. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 4. In such a model, all tokens, even for fully digital transactions, are bound to this IMK/CMK/SK derivation. This also applies for transaction credentials generated by server through API exposed by the transaction system for remote payment transactions.

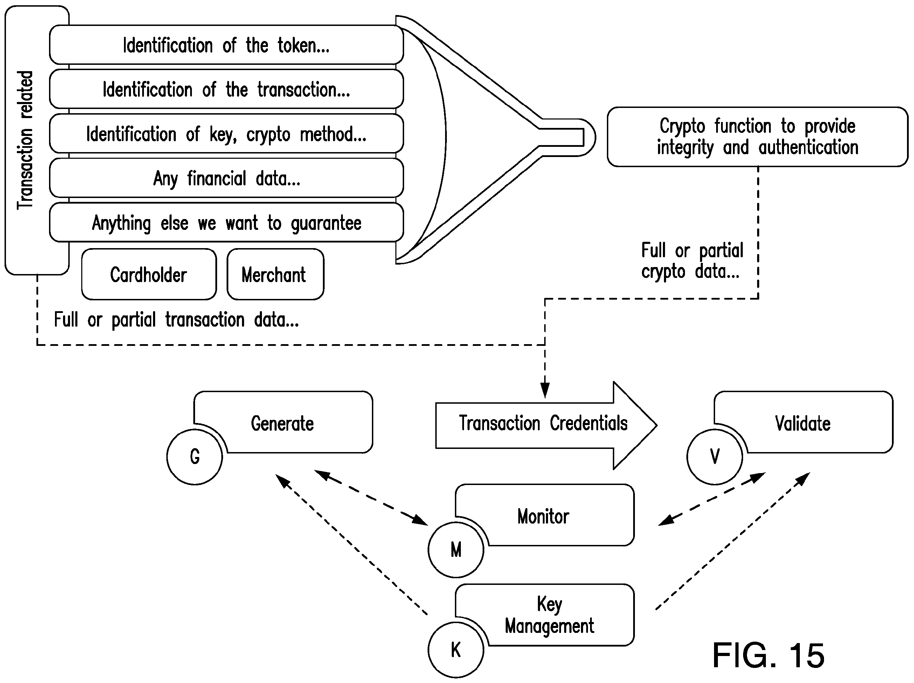

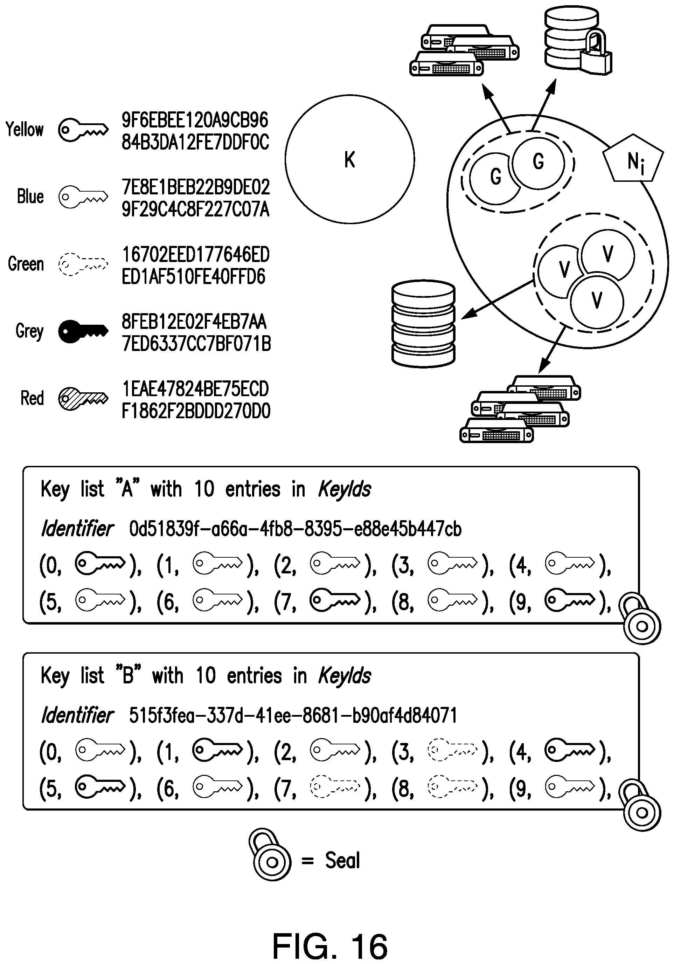

This approach requires a very heavy management load for keys, which is not appropriate for fully digital transactions, as is discussed below with reference to **Figures 15** **and** **16**. Generation of SKs, and hence Application Cryptograms, requires multiple cryptographic operations, not all of which can be carried out by a conventional off the shelf HSM, so bespoke HSMs are required. Massive distribution of keys across the system is required so that performance of a transaction can be supported wherever it occurs, and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance by appropriate prevention mechanisms even if there is the possibility of compromise at a system endpoint (for example, at the cardholder device). Aside from this, security has a limited role, as shown in **Figure 15**. The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. The present disclosure relates to an approach to monitoring which is effective to address the consequences of erroneous or malicious action by appropriate detection, messaging and reaction - as will be described, this largely takes place separately from the actual performance of a transaction.

This approach allows for decentralisation of the credential system from a complex central server into a number of nodes providing services. These nodes will typically be geographically distributed but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process carried out over the payment network of the payment system, with the validating service V being called upon where necessary to validate the credential. These services have access to the computing infrastructure (HSMs, databases) of a node. Monitoring M and key management K services are also provided - these may be centrally organised or comprise a mix of central and local functionality.

Access control to services can be provided in an essentially conventional manner. A general set of controls can be defined for a node, with the possibility of local modification - for example, to meet local regulatory or other specific security requirements. This approach makes it easy to implement localised policies, for example, by constraining all traffic for a particular country to a particular set of nodes, or by taking other region- or market-specific actions. Access control can be performed at more than one level (for example, for individual services, but also for a node), and there may be specific rules or checks for specific service types. Access control is potentially very granular and may provide specific solutions in a versatile way - for example, it could be used to allow a given merchant to perform a maximum number of transaction credential generation operations during a defined time for a given token.

The key management mechanism shown in Figure 16 illustrates how a limited number of keys can be allocated to a node while providing a deterministic process in order to pick a key to generate credentials. The same process can be used by a validation entity to determine the key that was used by the generator so that it can validate any cryptographic material that is part of the credentials submitted for validation.

For each node, the generation G and validation V services have access to a pool of HSMs. The HSMs contain keys that are each uniquely identified by a set of key identifiers (Keyld). Keyld may be a label, a value, an explicitly unique value such as a UUID, or anything else with appropriate properties. These Keyld values are stored in uniquely identified (Identifier) key lists - these key lists provide a list of relationships between an identifier (Id) and a stored key (Keyld). The identifiers (Id) are what will be determined by the deterministic process in order to establish what key is to be used, as will be described further below.

The integrity of each key list is guaranteed using a seal (Seal) - if the key lists are provisioned from a central location, this may be applied by a trusted party associated with that central location. Several other distribution models can be supported using for example a trusted party being a local functionality instead of a central location. A node will typically have a number of key lists available, but with only one active for generating credentials (G) at a given time - it will however generally be necessary for the validation service (V) to be able to access any key list that may be associated with a credential that is still valid. Key rotation in this approach is extremely straightforward - it may simply involve replacement of the active key list with another key list. It is however very straightforward to tell which Keyld is needed to validate a credential - it will be determined fully by the node identifier and the reference of the key list. That information is part of the credential and is used as input to the deterministic process to pick a key from a list of keys.

**Figure 16** illustrates an exemplary arrangement for Node Ni, which has two generation services G able to generate credentials associated with transactions. At any given point in time, these services G will be required to use a given key list - say Key List A in the first instance. This uses the yellow and blue keys, so these keys must be loaded in the HSMs used by the generation services G. After the expiry of a period of time, the key rotation process may for example mandate the use of Key List B - this uses yellow and blue keys, but also the green key, so the green key must be loaded in the relevant HSMs if not already present. The specific key to be used is selected from the key list by a deterministic process- this will typically give a different result after key rotation, but this is not inevitably the case (for example, Id=3 or Id=6 would give the blue key before or after rotation). While the generation services G do not need Key List A after key rotation, the validation services V still do - they require access to any key list that relates to a potentially valid credential. The validation services V must be able to establish exactly which key was used to generate a credential by the generation services G in order to validate a credential.

The transaction related data to be protected cryptographically includes identification of the token associated with the transaction, but also identification of the transaction itself. For this, some kind of transaction identifier is required. At each node, the credential generation and validation services have access to a local database which can be used to manage such data. To ensure that transactions are managed effectively across the system, any generation of transaction credentials for a given token should be associated with a unique transaction identifier for each transaction. This may be a UUID or any appropriate identifier structure (such as a concatenation of an n bit node identifier, an e bit epoch time, and a c bit local counter).

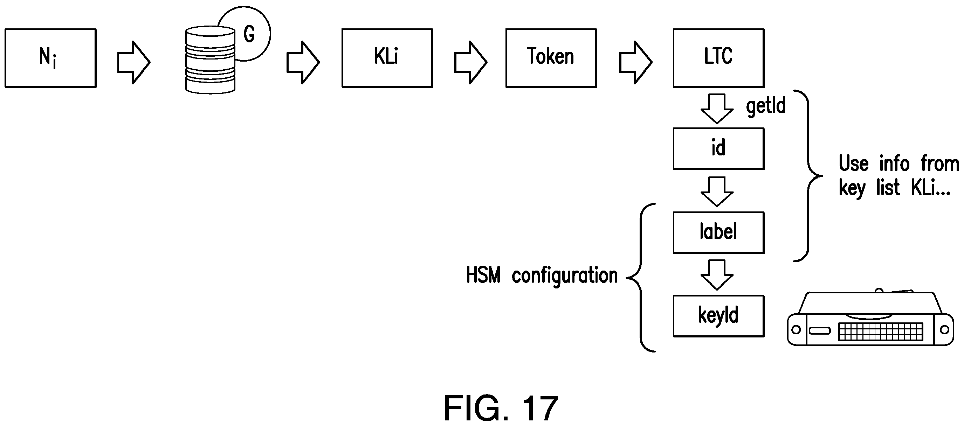

The size of data to be carried in transaction credentials could however be reduced to a few digits by use of a local transaction counter. This could simply be stored in the local database of a node and the local (rather than a global) value incremented when a local generation service G generates new transaction credentials for a token, a process shown in general terms in **Figure 17****.**

An exemplary process for identifying a key to use for a transaction will now be described with reference to **Figures 16** **and** **17**. As indicated, at any given time a generation service G has access to a set of keys in local HSMs and uses keys in accordance with its currently active key list. This key list is itself uniquely identified (by Identifier) and contains a list of entries which correspond to relationships between an identifier (Id) and a stored key, represented by Keyld. In the case of Key List A, there are ten entries, and each Id is a single integer.

There will be a deterministic process associated with a key list to determine which key will be associated with a given transaction. It need not be the same deterministic process for every key list, but it needs to be used consistently for that key list so that both generation and validation services will achieve the same result. To provide this association, the deterministic process should operate on information identifying the transaction, such as some kind of transaction identifier - in this case, the local transaction counter (LTC) is a particularly effective choice as this is conveniently available and easy to process. Note also that in the context of the token described in embodiments of the disclosure, it is LTC - rather than an ATC, as for a payment application - that is used as the "counter" value carried in the transaction data.

There are many choices available for a function, but the simplest choice is a MOD operation - for example here, Id = LTC MOD 10 would be appropriate to provide a deterministic result which could point to any of the available values of Id. Any validation service V with access to the transaction counter value in transaction data (or any counter derived from that value) can then determine the logical key identifier that was used by the generation service G that generated the credential and access the correct stored key without any trial-and-error mechanism. Associating the deterministic process function (referred to below as keyList.GetldFunction, or Getld) to the attributes of a key list in this way allows a scalable solution that can accept any number of logical key identifiers for a given key list.

The HSM cryptographic function should be appropriate to ensure data integrity and authentication through credential generation and validation. The cryptographic function operates on the chosen transaction data, using the key, and provides an output which does not expose the key. Various alternative cryptographic functions could be used - HMAC is a particularly effective choice with several options regarding the hashing function, but CMAC, CBC MAC are among possible alternatives not even talking about solutions using asymmetric cryptography. The cryptographic function used should be specified in the key list (as keyList.CryptoFunction) and is also driven by the capabilities of the HSMs used for generation and validation. On-soil regulations, cryptographic material export or other security considerations may lead to the choice of specific cryptographic functions.

Within the transaction data, there should be information representative of the application cryptogram generated during the transaction process. This may be a reduced form of the cryptogram - for example, in legacy EMV transactions this may be provided as the CVC2 field. This is significant as a validation service V must be able to access all the data used by a generation service G to generate a cryptogram - this will include the following:
dynamic information carried as part of the transaction flow;
shared information from one of the following:
   replicated processes (such as management of the key lists);
   system parameters for particular use cases.

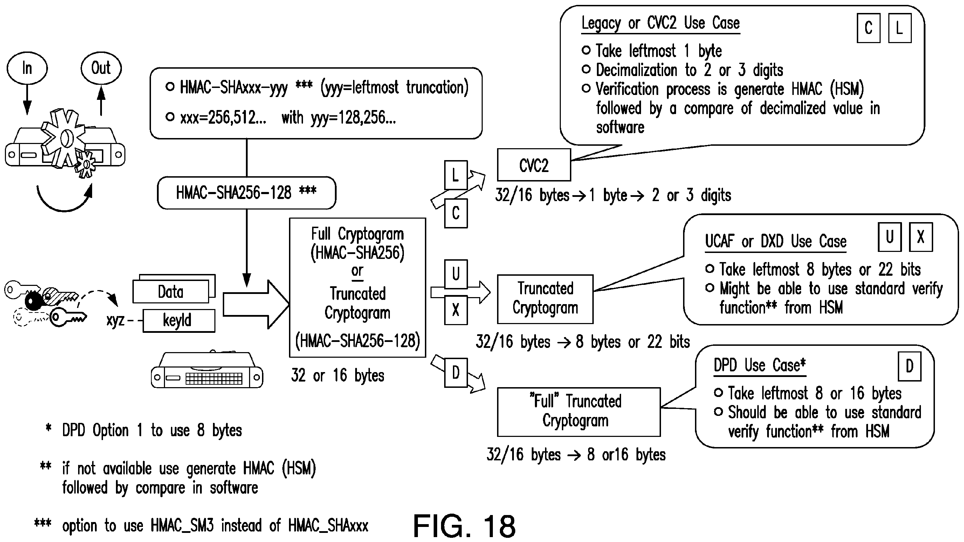

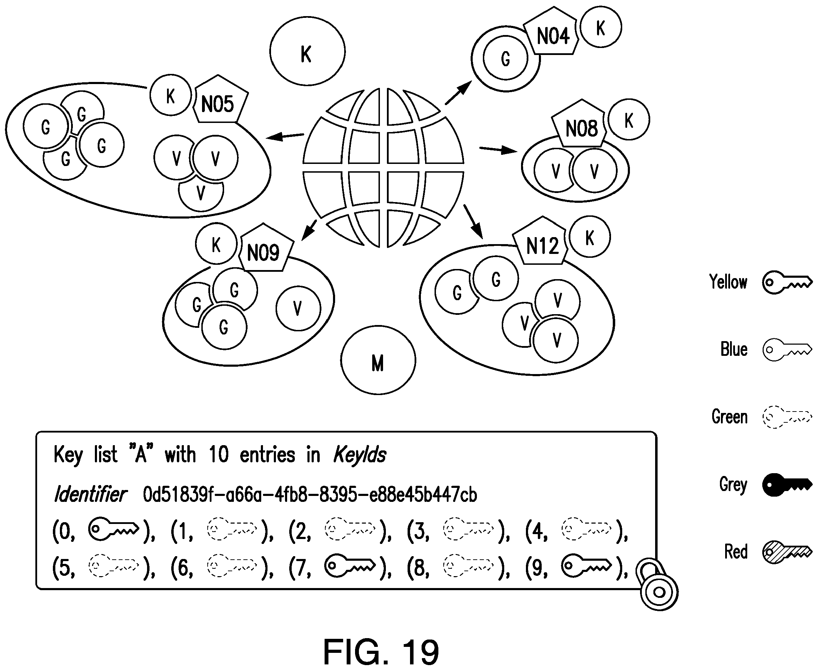

A full set of cryptographic mechanisms is shown in **Figure 18**. Key management is discussed with reference to **Figure 19**. There are two aspects to key management in this model: management of the keys themselves, including their generation and delivery to the HSMs associated with the nodes, and management of the key lists, including their generation, distribution, activation and deactivation. The key lists are sensitive assets while keys are considered as secret assets - the key lists define the keys to be used for generation and validation of cryptograms. Keys require end to end security with secure transport of the keys using wrapping/unwrapping techniques when loading the keys in HSMs. Their use should not be compromised by the key lists in case an attacker would like to change the content of a key list in order to alter the key selection process. The integrity of key lists is guaranteed by the seals - a seal is provided for a key list by the generating party or an associated trusted party, will involve a suitable cryptographic process (such as HMAC with an appropriate dedicated key or using for example a digital signature generated using asymmetric algorithms such as RSA, ECC, SM2...), and has the effect that any relevant part of the system can have confidence that the key list was generated by an appropriate party and has not been modified. In addition, the key list seals can be used in the generation and validation of cryptograms to secure the credentials.

Different control models are possible. There may be centralised control, with a central service generating keys and key lists, and distributing these to the different nodes. There however also may be localised control if dedicated processes are required at a particular node. This may in particular apply if there are specific requirements for a particular country - for example, on-soil regulations or restrictions on export of cryptographic material. This may also apply if there is a proprietary mechanism needed for HSM management - for example, with a particular cloud service provider. This need not be node-limited - it could apply to regional control with a central service within a region (this may be particularly appropriate where there is a specific security model for a particular country to meet local legal requirements). There may also be a hybrid or composite model, in which some key and key list provisioning is central, whereas some is local - there may also be a distributed model in which distributed peers together assume the role of a central service.

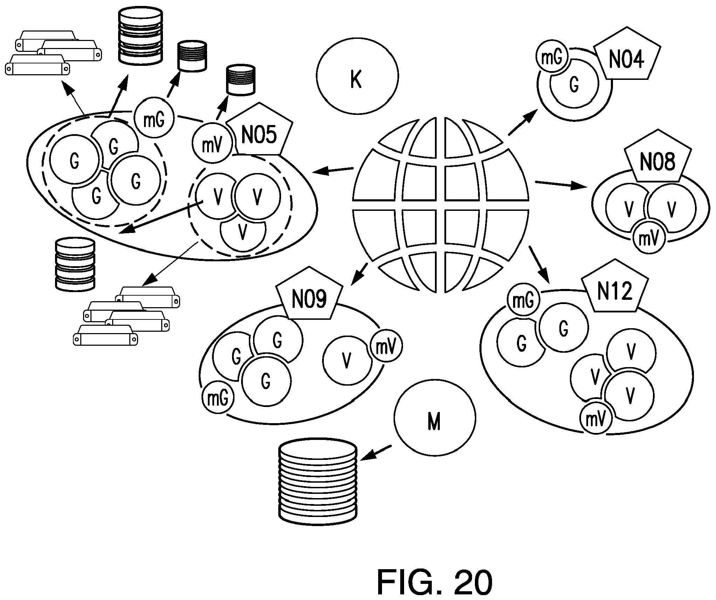

Monitoring is shown in general terms in **Figure 20**. Here, monitoring is complementary to security actions taken directly in a service to prevent fraud or misuse (such as the basic purpose of the service - generation of a credential using a cryptogram with subsequent validation). Such monitoring aims to detect security anomalies associated with a transaction - it can then trigger appropriate reaction mechanisms to contain any security risk and identify any attacker. In principle, this may have both local and central aspects. It is found that a hybrid approach is particularly effective in order both to provide effective detection of any issue and to produce reaction effective to counter risks associated with a fully distributed architecture.

There are three types of issue to be addressed by monitoring in such a system: integrity of the distributed system; generation of transaction credentials; and validation of transaction credentials. As transaction credentials may be generated or validated anywhere, it is important to have effective monitoring across the whole distributed system. An exemplary risk is that of misuse by an attacker of genuine transaction credentials generated by a generation service G in a node, in particular by an attempt to validate in multiple validation services in other nodes - this would be an issue if a validation service V did not have effective visibility of actions taken by validation services V in other nodes of the distributed system.

While monitoring is important to maintain the integrity of the system, it is also important to limit the amount of messaging that results to ensure that the system is scalable and will not be overloaded by the monitoring process. It is therefore desirable for messaging out of nodes to be limited to that genuinely necessary to address threats and for nodes to store information locally to allow effective use of the results of monitoring.

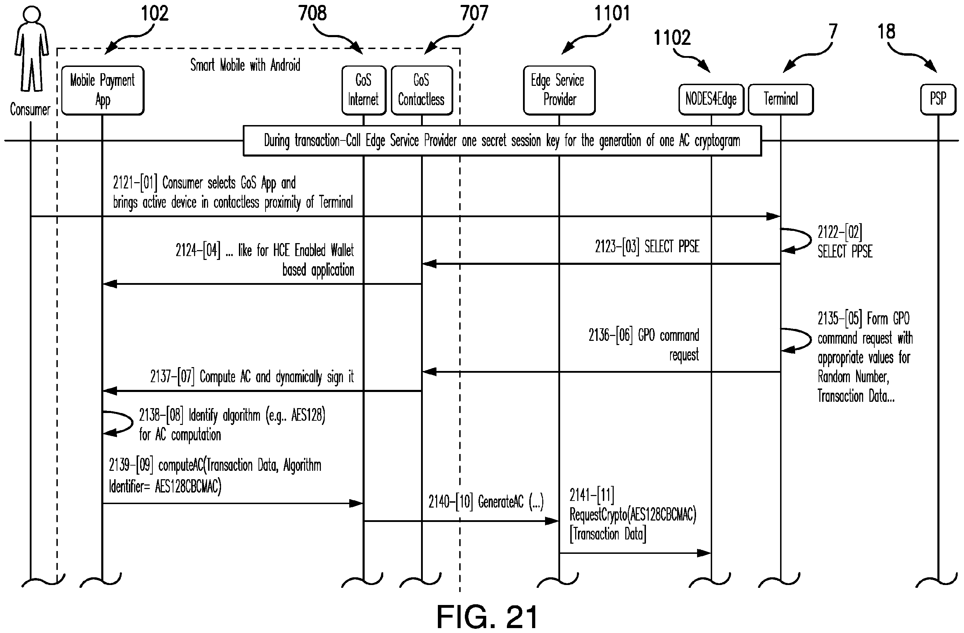

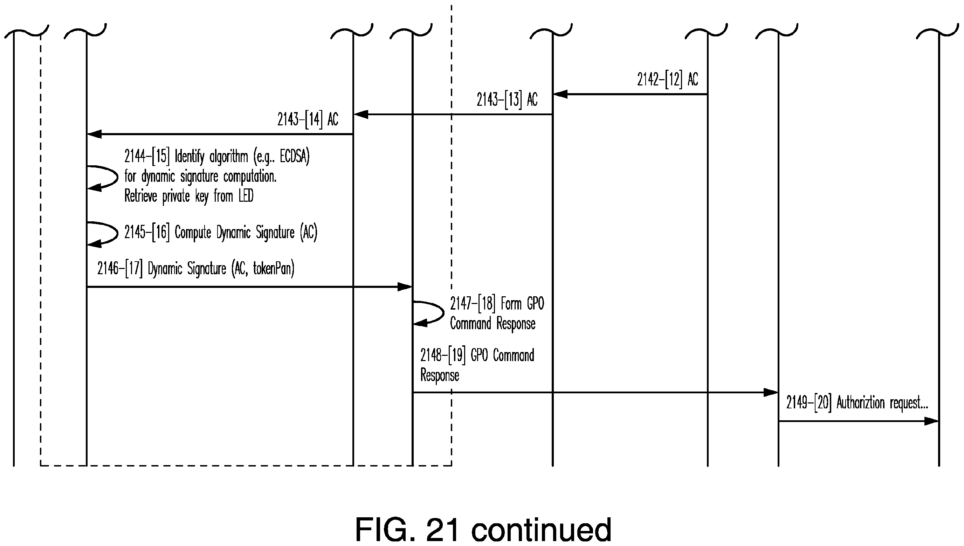

Using a 5G architecture with edge servers able to provide rapidly accessible computation and (using a NODES distributed cryptographic service system) cryptographic services, a different transaction flow is possible which avoids the drawbacks of existing approaches while still meeting "fast flow" requirements. This uses the approach of Figure 1, and additional details of its implementation are illustrated in Figure 21.

The steps of a transaction flow that may be implemented by the architecture of Figure 11, in combination with 5G communication capabilities, will now be described with reference to **Figure 21**.

The transaction flow of Figure 21 begins in a similar manner to the transaction phase that was described earlier with reference to Figure 10. The transaction is started by the consumer opening or otherwise activating the wallet application and bringing the payment device into proximity 2121 with the terminal to establish communication and begin the contactless transaction. As was the case for the transaction flow of Figure 10, the first step in the flow of Figure 21 is to establish a PPSE (Proximity Payment System Environment) for the transaction - this is initiated 2122 by the terminal, with a SELECT PPSE command sent 2123 to the wallet application and communicated 2124 to the MPA. Thereafter, although it is not explicitly illustrated in the diagram (Figure 21 focuses more on those aspects of the transaction flow which differ from that of Figure 10), a corresponding set of processing steps would then be followed by the MPA, wallet application and terminal in order to ascertain the information that will be needed from the terminal for the MPA to generate authenticable transaction data; these steps would generally mirror steps 925 to 934 as set out in relation to Figure 10.

In more detail, the MPA retrieves its template (FCI - File Control Information - template) for such a transaction and provides this to the wallet application. The wallet application notes that there will be no card selection process by the consumer - as this is a rapid contactless transaction that needs to operate according to established defaults - and provides a list of payment applications by application identifier (AID) to the terminal, with the "fast flow" application heading the list. The application list is prioritised by the terminal, and here it is assumed that fast flow is selected and this is communicated to the wallet application, and hence to the MPA. The MPA then retrieves the FCI template and establishes what information is needed from the terminal and in what form and provides this to the wallet application as a Processing Data Objects List (PDOL), which is sent to the terminal. Thereafter, as can be seen from the figure, the terminal prepares 2135 the required information for a Get Processing Options (GPO) command - this comprises the information needed by the MPA to prepare an AC, which will include the transaction data and a random number. The GPO command is sent 2136 to the wallet application and on 2137 to the MPA, where the MPA is then tasked with generating the AC and applying a digital signature to the result.

However, the processing flow that then takes place is where a significant divergence from the method shown in Figure 10 takes place.

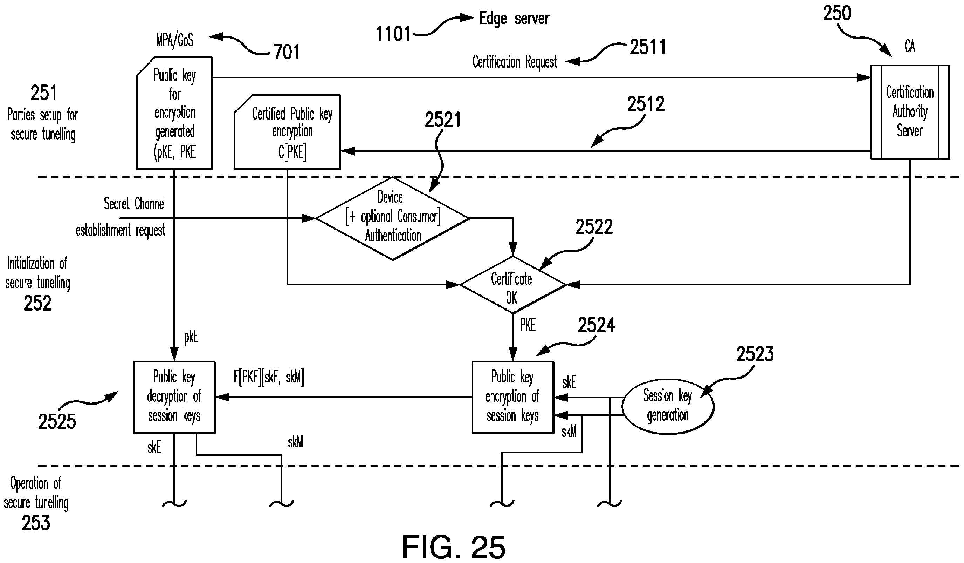

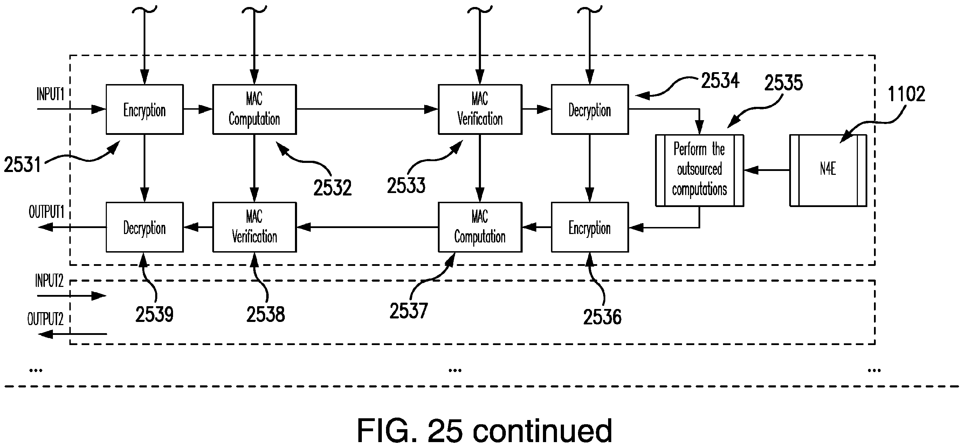

As described earlier, although the MPA still manages the AC computation process, the MPA does not actually carry out the AC computation itself (using the necessary session key that was, in the case of the flow of Figure 10, stored in the LDE). However, the processing flow that then takes place is where a significant divergence from the method shown in Figure 10 takes place. As described earlier, although the MPA still manages the AC computation process, the MPA does not actually carry out the AC computation itself (using the necessary session key that was, in the case of the flow of Figure 10, stored in the LDE). Instead, the MPA outsources this calculation to a separate entity, specifically the edge service provider 1101. In order to do so, the MPA identifies and collates 2138 the information that will be needed to compute the AC. This information includes the transaction data that was provided by the terminal to the MPA in the GPO command; in addition, as a different entity (not the MPA) will be calculating as well, an algorithm identifier is provided to allow the algorithm that is to be used for calculating the AC to be identified (in Figure 21, this is labelled as 'AES128CBCHMAC' - AES128 indicating in this case that symmetric encryption will be used). A computeAC command is sent from the MPA to the wallet internet application 708; a corresponding generateAC command is then sent onwards 2139 to the edge service provider 1101. Prior to sending the computeAC command, the MPA will have established / opened a temporary secure communications channel with the edge service provider 1101 for secure data exchange. How this temporary 'tunnelling' is established will be described in more detail subsequently with reference to Figure 25.

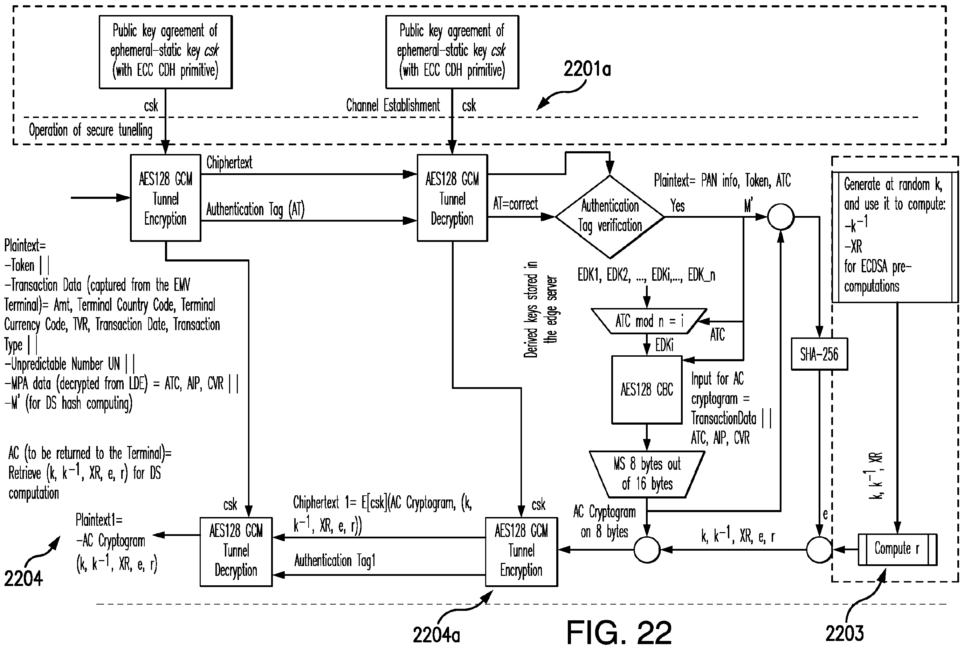

The generateAC command is then received 2140 by the edge service provider 1101 and is used to generate a requestCrypto command 2141 that is transmitted to the cryptographic service provider 1102, with which the edge service provider 1101 is in secure communication and which is tasked with providing cryptographic services to the edge service provider 1101. As noted above, the cryptographic service provider 1102 may take the form of a node of the NODES system, or another computing entity having a secure channel with the edge service provider 1101. The cryptographic service provider then generates the AC - it retrieves the appropriate session key from the key storage location based (at least partly) on the information provided in the algorithm identifier (how this key is retrieved using the NODES key provision system was described previously with reference to Figures 12 to 20) and uses this key to perform the appropriate cryptographic processing in relation to the transaction data (for example, as described in relation to Figure 6). The resulting AC is then returned 2142 by the cryptographic service provider 1102 to the edge service provider 1101, and thereafter is transmitted 2143 onwards to the MPA (via the wallet internet application), using the secure communication channels established therebetween. The MPA then proceeds to produce a digital signature using the AC (for example, using the methods described earlier in relation to Figure 6) - as shown in Figure 21, this is implemented by the MPA identifying 2144 the algorithm that should be used for dynamic signature computation (and retrieving the appropriate private key for the computation from the LED); and then computing 2145 the dynamic signature in the desired manner. Additional details regarding how this dynamic signature may be calculated are also described subsequently with reference to Figure 22. The dynamic signature comprising the AC is then sent 2146 to the wallet application. The wallet application compiles 2147 a response to the GPO command which is then sent 2148 to the terminal - this is the last point at which contact is needed, so defining an end point of the time limit for the "fast flow" process. As for conventional EMV, an authorisation request is then sent 2149 from the terminal - the signed message comprises token information and normal transaction data as well as the AC.

As will be appreciated from the foregoing, rather than relying on the limited computational power of the payment device, much more powerful edge computing can be used for outsourcing of cryptographic services (storage of secret cryptographic keys and calculation of an AC), without a communication lag. Such outsourcing, and the attendant advantages associated therewith in relation to cryptographic key security, simplification of the transaction flow (removal of the need to carry out a pre-transaction key provision phase) and increased efficiency of key use, are made possible, whilst still meeting the "fast flow" requirements (that the interaction duration for the contactless transaction be 500ms or less), as a result of the lower latency computation and communication capabilities that are provided by the 5G environment.

Further discussion of how NODES may be used for credential generation will now be discussed with reference to **Figure 22**. In this process, the edge server ('edge service provider 1101') interacts with a local cryptographic service ('cryptographic service provider 1102') in providing the secure result (AC) as well as some parameters that are required (by the MPA) for generating the digital signature over the AC subsequently. To begin with, as noted above, generation of a secure 'tunnel' 2201 is required to establish the secure communications channel between the edge server and the user's mobile device is carried out (as will be discussed further in relation to Figure 25).

Thereafter, cryptogram generation (computation of the secure result AC) is carried out 2202 using NODES. In order to do so, the edge server may request a suitably configured server (for example, a "DXD F2F Service", where DXD describes a tokenisation architecture and F2F indicates that the service relates to face-to-face contactless transactions). The DXD F2F server interacts with the NODES service, firstly requesting decryption of the encryptedPanlAD, which allows PAN information (such as PAN, PSN, expiry date...) to be established and provided to the DXD F2F server. The DXD F2F server may use geolocation to determine MerchantID for the transaction, and there may be additional transaction information collected at this point (for example, a Strong Cardholder Authenticator flag may be received from the MPA). The DXD F2F server then provides transaction information in the appropriate form for credential generation (here, this is as a UCAF v0.6 template as will be described further below). The NODES node generates a credential as has been described above for NODES, and this is provided to and used at the DXD F2F service to create an AC. The generated AC can be returned to the MPA in the user device, for onward provision to the terminal.

In addition, rather than relying on the limited computational power of the payment device to perform the more complex parts of the digital signature calculation, much more powerful edge server computing can also be used, without a communication lag. Specifically, the rest of the cryptographic elements needed to perform the digital signature can now be produced 2203, with the edge server using local cryptographic resources (e.g., "Edge Server CaaS" - Cryptography as a Service - to produce results with rapid processing and minimal communication latency). To do so, the edge server requests a (k,k⁻¹,XR) triple from the CaaS - while this may be computed directly, for even greater speed this may simply be taken from a buffer of pre-computed pair values. k is generated at random, and if using ECDSA, XR is computed on EC as (XR, YR) = kG, where G is the EC generator. XR is further converted to an integer j. Details of how this may be achieved are set out, for example, at ANS X9.62lt is noted that, in some embodiments, this generation of the (k,k⁻¹,XR) triple may be carried out prior to secure tunnel establishment - a channel session key can be generated from k, and the tunnel established 2201a using this session key. The (k,k⁻¹,XR) triple is provided to the edge server, which determines the message to be signed by the MPA, which includes the previously-generated AC. The edge server requests a hash e (using SHA-256, for example) to be made of this message by CaaS, which returns this value. The edge server can then compute the final pre-computable parameter, r, where
r = j mod n. and provides 2204 the message to be signed (in this case, the computed AC) and the pre-computed parameters (k, k⁻¹, XR, e, r) to the wallet application, and hence to the MPA. The secure channel can close at this point. It will be noted that prior to providing the computed AC and pre-computed parameters to the wallet application, CaaS may first encrypt 2204a this information (e.g., using AES128 encryption); it is this encrypted 'ciphertext', along with Authentication Tag, that is sent to the wallet application.

It will be appreciated based on the above descriptions that several of the steps required to pre-compute variables for use in the digital signing process are computationally intensive and time consuming - e.g., computing hashes, generating random numbers and multiplying points on an elliptical curve (EC). By outsourcing these processing steps to the edge server (and the associated CaaS), the vastly greater computational power of the edge server can be harnessed, whilst still meeting the "fast flow" requirements (that the interaction duration for the contactless transaction be 500ms or less), as a result of the lower latency computation and communication capabilities that are provided by the 5G environment. There is, however, no need for a private signing key (retained by the LED and used by the MPA) to be used when computing these variables. The computationally intensive processing that is required to generate these variables is therefore suitable for outsourcing by the MPA to the edge server; whilst retaining the ability of the MPA (upon receipt of the pre-computed variables) to carry out the final digital signing process of the secure result AC.

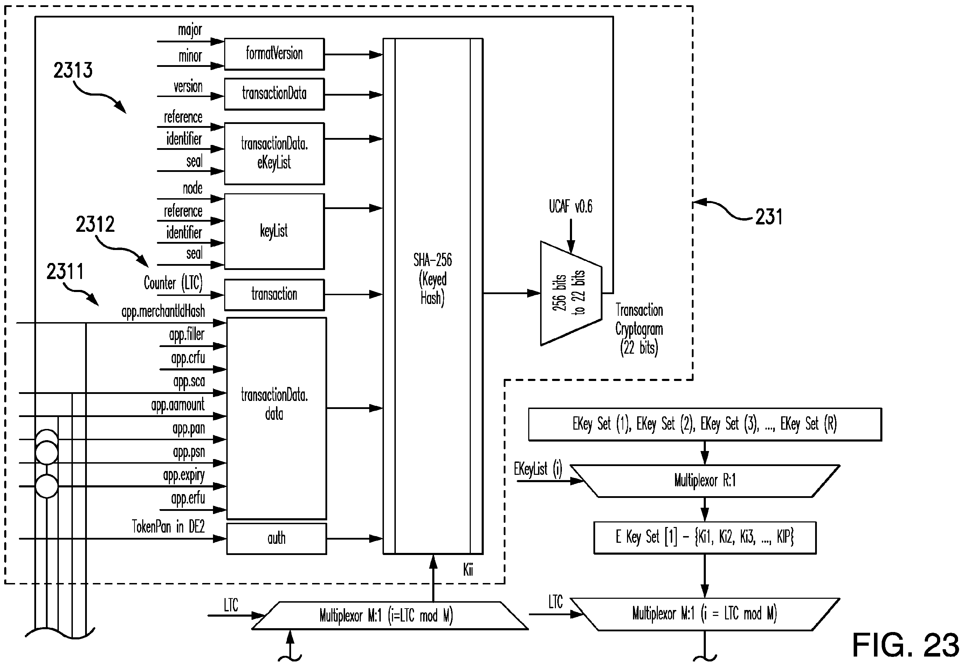

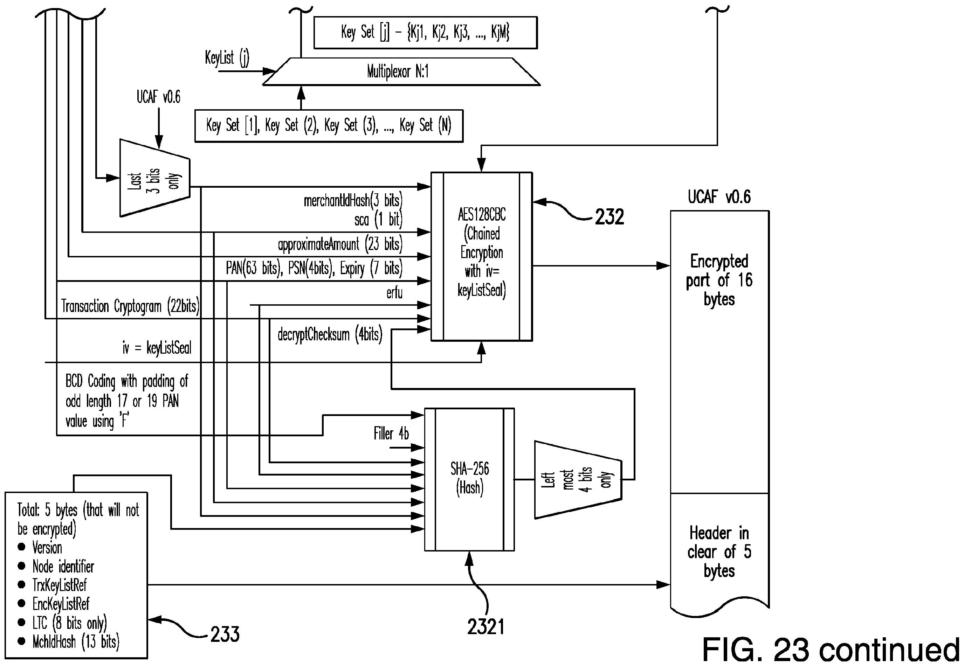

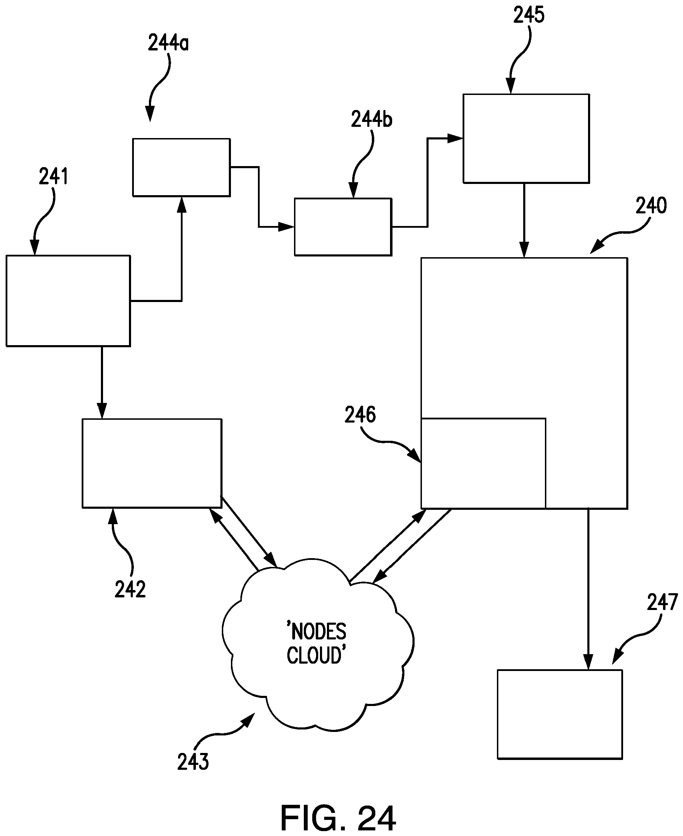

For completeness, further discussion of transaction handling for digital transactions using NODES, and the application of this transaction handling model to embodiments of this disclosure, are illustrated in Figures 23 and 24. A discussion of how secure tunnelling between the edge server and the user device may be achieved is illustrated in Figure 25.

**Figure 23** illustrates the formation of a UCAFv0.6 - UCAF (Universal Cardholder Authentication Field) is a standard for collecting digital transaction information - appropriate for use in present embodiments in which a NODES arrangement is used for credential generation and validation and in which the SM suite of cryptographic algorithms is used. Use of UCAF in the context of NODES is discussed in more detail in WO2022/046330 (which uses UCAFv0.7, but employs similar principles to that shown here) and also in the applicant's subsequent British Patent Application No. 2107661.7 (which shows use of UCAFv0.6), both of which are incorporated by reference to the extent permitted by law.

The top part 231 shows generation of the application cryptogram using an SHA-256 keyed hash. Transaction data 2311, including the LTC 2312, and transaction processing information 2313 are hashed using a key Kji derived through NODES key selection to produce a 22 bit transaction cryptogram. This, along with various of the transaction data (and a checksum SHA-256 hash 2321) is provided to an AES128 block cipher 232 operating in CBC mode which forms an encrypted part of the UCAFv0.6 (effectively a MAC). An unencrypted header 233 is also provided - this provides necessary information for routing of the transaction (such as a node identifier) and information necessary to begin processing of the transaction for validation of the credential, for example.

**Figure 24** illustrates a transaction processing architecture that may be implemented to provide the transaction processing flow of Figure 21. As previously noted, the edge server 241 ('edge service provider 1101') connects to a NODES node 242 ('cryptographic service provider 1102'), which interacts with the wider NODES network 243 (described here as "NODES CLOUD"). The generation of the secure result (the AC computation), along with the previously described 'pre-computation' of parameters (k, k⁻¹,XR, e, r), is carried out here; and the results are returned to the MPA in the user's mobile device 244a (via the path established between the NODES and the edge server). Thereafter, as previously mentioned, transaction information (including the digital signature of the AC) is transmitted to the terminal 244b from the MPA in the mobile device 244a for subsequent authorisation in the network. This will be routed to the acquirer 245 and through the transaction infrastructure 240 in the normal way, with transaction information available for routing being such as to direct it to the DXD transaction processing system 246. The AC will be validated using the NODES network 243, and the necessary transaction information to allow authorisation is provided to the issuer 247. Once authorised, authorisation information follows a conventional path for an EMV transaction and is not explicitly shown here.

Secure tunnelling will now be described in more detail with reference to **Figure 25****,** which shows the establishment of temporary secure tunnelling between the user device (specifically the wallet application, and hence the MPA), and the edge server. There will also be a permanent secure channel between the edge server and the local instance of the NODES network. This may be implemented through any appropriate key establishment mechanisms and will not be described further here.

The secure tunnelling approach shown in Figure 25 has three phases. The first phase 251 is an initial set-up phase, which will take place at initial system set-up. The wallet application 701 makes a certification request 2511 to a certification authority server 250, which provides the basis for certified public key encryption at the edge server 1101.

The second phase 252 involves initialisation of the secure tunnel when needed - this will be initiated at the wallet application 701 and will typically be started by the user activating the wallet application, which will generally take place seconds before the actual transaction. The first stage is authentication 2521 of the device (optionally this may also involve authentication of the user) and if this is successful (for example by the edge server 1101 determining 2522 that the or each certificate is legitimate), this is followed by session key generation 2523 with session keys sent 2524 to the wallet application 701 in encrypted form using the public key encryption already established. These session keys are then decrypted 2525 at the wallet application 701.

The third phase 253 is the secure tunnelling itself. In this phase, the wallet application 701 acts as a client and presents data to be transmitted for processing after encryption 2531 and MAC generation 2532 using the session keys. The edge server 1101, acting as the server in this server/client relationship, verifies the MAC 2533 and decrypts 2534 the data to perform 2535 the outsourced computation, with the result being encrypted 2536 and a further MAC generated 2537 before the result is sent back to the wallet application 701, with MAC verification 2538 and decryption of the result 2539 at the wallet application 701 following. These steps may be repeated as necessary until no further interaction is required between the wallet application 701 and the edge server 1101, at which point the secure tunnel will be closed.

As the skilled person will appreciate, the embodiments described above are exemplary, and further embodiments falling within the spirit and scope of the disclosure may be developed by the skilled person working from the principles and examples set out above.

## Claims

1. A method of generating a secure result to support authorisation of a rapid wireless interaction between a first computing device and a second computing device, the method being implemented by a third computing device remote from the first and second computing devices, the method comprising:
receiving, from the first computing device via a secure communications channel, a request to generate the secure result, the request comprising interaction data relating to the wireless interaction;
retrieving, from a data store in secure communication with the third computing device, cryptographic material to be used to generate the secure result;
generating, using the retrieved cryptographic material, the secure result by applying the cryptographic material to the interaction data; and
transmitting, to the first computing device via the secure communications channel, the secure result, for processing and onward provision by the first computing device to the second computing device for subsequent authorisation of the wireless interaction.

2. The method of claim 1, wherein the first computing device and the third computing device communicate by cellular telecommunications, and the third computing device is located at the base station of a telecommunications network.

3. The method of any preceding claim, wherein the request received from the first computing device further comprises a cryptographic identifier for identification of the appropriate cryptographic material to be used to generate the secure result.

4. The method of any preceding claim, wherein the request comprises a request to compute variables for a digital signature to be applied to the secure result by the first computing device; and wherein the method further comprises:
computing the requested variables, and transmitting the computed variables to the first computing device along with the secure result to allow the first computing device to digitally sign interaction data.

5. The method of any preceding claim, wherein the wireless interaction is a contactless payment transaction, and wherein the first computing device is a consumer computing device and the second computing device is a point of sale terminal, and wherein the secure result is an application cryptogram for the contactless payment transaction.

6. The method of any preceding claim, wherein the data store is retained by a distributed cryptographic service configured to provide cryptographic material for digital transactions.

7. A computing device comprising a memory and a suitably programmed processor, wherein the computing device is adapted to carry out the method of any of claims 1 to 6 as the third computing device.

8. The computing device of claim 7, wherein the computing device is an edge server.

9. A method at a first computing device of processing data to support authorisation of a rapid wireless interaction between the first computing device and a second device, the method comprising:
initiating the wireless transaction with the second computing device;
transmitting, to the third computing device and via a secure communications channel, a request to generate a secure result, the request comprising interaction data relating to the wireless interaction;
receiving, from the third computing device and via the secure communications channel, the secure result, wherein the secure result was generated by the third computing device by applying cryptographic material to the interaction data, the cryptographic material being stored in a data store associated with the third computing device; and
transmitting, to the second computing device, the secure result for subsequent authorisation.

10. The method of claim 9, wherein initiation to completion of the interaction takes less than 0.5 seconds.

11. The method of claim 9 or claim 10, wherein the request sent to the third computing device further comprises a cryptographic identifier for identification of the appropriate cryptographic material to be used to generate the secure result.

12. The method of any of claims 9 to 11, wherein the request comprises a request to compute variables for a digital signature to be applied to the secure result by the first computing device; and wherein the method further comprises:
receiving, from the third computing device, the computed variables; and using the computed variables to digitally sign interaction data including the secure result for provision to the second computing device.

13. The method of any of claims 9 to 12, wherein the wireless interaction is a contactless payment transaction, and wherein the first computing device is a consumer computing device and the second computing device is a point of sale terminal, and wherein the secure result is an application cryptogram for the contactless payment transaction.

14. A computing device comprising a memory and a suitably programmed processor, wherein the computing device is adapted to carry out the method of any of claims 9 to 13 as a first computing device.

15. The computing device of claim 14, wherein the computing device is a mobile telephone, wherein the computing device is programmed to use host card emulation for wireless interaction with a second computing device, and wherein the computing device comprises a wallet application adapted to perform a contactless payment transaction with the second computing device.
